(19) Europäisches Patentamt
European Patent Office
Office européen des brevets

(11) Publication number: **0 492 828 A1**

(12) **EUROPEAN PATENT APPLICATION**

(21) Application number: **91311214.0**

(51) Int. Cl.5: **C08L 83/04**, C08L 83/08

(22) Date of filing: **03.12.91**

(30) Priority: **26.12.90 US 633812**

(43) Date of publication of application: **01.07.92 Bulletin 92/27**

(84) Designated Contracting States: **DE FR GB**

(71) Applicant: **DOW CORNING CORPORATION**
**3091 S. Saginaw Road**
**Midland Michigan 48686-0994(US)**

(72) Inventor: **Lutz, Michael Andrew**
**1815 Wyllys**
**Midland, Michigan(US)**
Inventor: **Scheibert, Kristen Andrea**
**291 Genrich Road**
**Sanford, Michigan(US)**

(74) Representative: **Horton, Sophie Emma et al**
**Elkington and Fife Prospect House 8**
**Pembroke Road**
**Sevenoaks, Kent TN13 1XR(GB)**

(54) **Mixture of adhesion additives useful in UV curable compositions and compositions containing same.**

(57) An adhesion additive for use with ultraviolet radiation curable siloxane compositions is a mixture of (I) a reaction product of an alkoxysilicon compound, a hydroxyl endblocked poly(diorganosiloxane) and a catalyst for the reaction between silicon-bonded alkoxy and silanol groups, (II) an alkoxy silicon compound and (III) a catalyst. Alkoxy silicon compounds can be those of the formula $R_a{}^*Si(OR)_{4-a}$ or $(RO)_3Si\text{-}X\text{-}Si(OR)_3$ wherein X can be ethylene, R* can be alkyl, alkenyl, acryl functional alkylene radical or glycidoxypropyl, a is 0 or 1 and -OR is an alkoxy group. Ultra-violet radiation curable siloxane compositions with improved adhesion are obtained by mixing the adhesion additive mixture with a mixture which has at least one ultraviolet radiation activatable siloxane polymer and a photoinitiator. These compositions can be used as optical fiber coatings, conformal coatings and other coating applications where adhesion to a substrate is important.

EP 0 492 828 A1

This invention relates to an adhesion additive for use in ultraviolet radiation curable siloxane compositions and the resulting compositions containing same:

Typical UV curable siloxane coatings exhibit very poor adhesion to a number of substrates. The poor adhesion limits the usefulness of the UV curable compositions in many applications. Several methods exist to improve the adhesion of UV curable siloxane compositions to substrates, but most generally have limitations. Adhesion additives can be added directly to the UV curable siloxane composition, but these additives often require a thermal post cure after the UV cure before good adhesion develops. Even when adhesion additives do provide improved adhesion for UV curable siloxane compositions at room temperature, they typically do not work for all compositions. Additionally, the type of substrates to which a specific composition adheres may not include all those required for a targeted application. Some also contain bonds which are not hydrolytically stable and thus may provide poor adhesion in a humid environment. A need exists for adhesion additives which improve the adhesion of UV curable siloxane compositions without the necessity of thermal post cure and which overcome some of the above mentioned shortcomings.

The inventors being faced with the problem of increasing the adhesion of UV curable siloxane compositions to a variety of substrates undertook an investigation which led to the present inventive solution. The adhesion sought was of the unprimed nature, such that the UV curable composition applied to a substrate would develop the required adhesion without the use of a primer. The cured film should rapidly develop adhesion to the substrate. Much of the prior art materials require substantial periods of time before the desired adhesion is obtained. The adhesion developed should be strong enough that the cured composition exhibits cohesive failure. Other characteristics of the desired adhesion were that it should retain its strength under high moisture conditions and it should not be corrosive to electrical and electronic devices.

A mixture was unexpectedly found to promote adhesion between compositions containing acrylamide functional polyorganosiloxanes and substrates such as aluminum and glass. This newly discovered mixture did not follow the concept believed to be required for adhesion additives.

This invention relates to an adhesion additive for ultraviolet radiation curable siloxane compositions consisting essentially of a mixture consisting essentially of (I) a reaction product consisting of the material obtained by combining and reacting

(A) an alkoxysilicon compound having a general formula $Si(OR)_4$ where R is methyl or ethyl or an alkoxysilicon compound having a general formula $(RO)_3Si\text{-}X\text{-}Si(OR)_3$ in which R is methyl or ethyl and X is a divalent radical selected from the group consisting of $-(CH_2)_n-$ where n has a value of from 1 to 10 inclusive; $-C_6H_4-$;

$$-CH_2CH_2-\left[\begin{matrix} R' \\ | \\ Si-O \\ | \\ R' \end{matrix}\right]_y \begin{matrix} R' \\ | \\ -Si-CH_2CH_2- \\ | \\ R' \end{matrix}$$

where each R' is independently selected from a group consisting of an aliphatic hydrocarbon radical and an aromatic hydrocarbon radical and y has a value of from 1 to 10 inclusive; and $-O(R''_2SiO)_m-$ in which R'' is selected from the group consisting of -OR and R' and m has a value of from 0 to 10 inclusive,

(B) a polydiorganosiloxane of the formula $HO(R^2{}_2SiO)_xH$ where $R^2$ is a monovalent radical independently selected from the group consisting of an aliphatic hydrocarbon radical and aromatic hydrocarbon radical and x has a value of from 3 to 50 on the average,

(C) a catalytic amount of a catalyst for reaction between a ≡SiOR group of (A) and a hydroxyl group of (B),

where the amounts of (A) and (B) are such that the molar ratio of moles of alkoxy in (A) per mole of hydroxy group in (B) is from 2 to 15,

(II) an alkoxysilicon compound having a general formula $R_a{}^*Si(OR)_{4-a}$ where R is methyl or ethyl, R* is a monovalent radical selected from alkyl, alkenyl, acryl functional alkylene radical or glycidoxypropyl and a is 0 or 1 or an alkoxysilicon compound having a general formula $(RO)_3Si\text{-}X\text{-}Si(OR)_3$ in which R is methyl or ethyl and X is a divalent radical selected from the group consisting of $-(CH_2)_n-$ where n has a value of from 1 to 10 inclusive; $-C_6H_4-$;

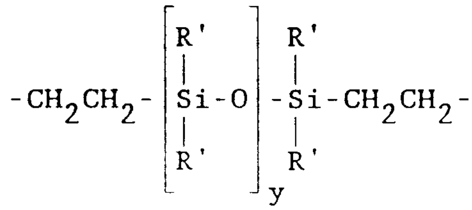

where each R' is independently selected from a group consisting of an aliphatic hydrocarbon radical and an aromatic hydrocarbon radical and y has a value of from 1 to 10 inclusive; and $-O(R''_2SiO)_m-$ in which R'' is selected from the group consisting of -OR and R' and m has a value of from 0 to 10 inclusive, and

(III) a compound capable of catalyzing an adhesion reaction between a coating and a substrate.

The adhesion additive mixture can be used to make ultraviolet radiation curable siloxane compositions which cure in a few seconds by exposure to ultraviolet radiation to elastomeric film with excellent unprimed adhesion to various substrates, such as glass and aluminum.

The adhesion additive mixture of the present invention overcame the deficiencies for use in the electronics industry especially for compositions based on acrylamide functional polyorganosiloxanes. This mixture also provides adhesion to glass optical fibers both in the presence and absence of moisture. The adhesion is observed by the improvement in performance under mechanical, thermal and chemical stress. The adhesion develops very quickly at room temperature when a composition containing it cures and it can also be achieved by heating ultraviolet radiation cured coating compositions containing the mixture.

This invention also relates to an ultraviolet radiation curable siloxane composition comprising (1) a mixture comprising at least one ultraviolet radiation activatable siloxane polymer which will cure when exposed to ultraviolet radiation by forming a crosslinked product and a photoinitiator which is activated by ultraviolet radiation and (2) the adhesion additive mixture described above.

The adhesion additives of the present invention are specifically designed to provide their adhesive characteristics when used in siloxane compositions which are curable by exposure to ultraviolet radiation. The adhesion additive is a mixture of (I) a reaction product of two ingredients, an alkoxysilicon compound (A) and a hydroxyl endblocked polydiorganosiloxane (B) in the presence of a catalyst to promote the reaction between the alkoxy groups of (A) and the hydroxyl groups of (B); (II) alkoxysilicon compound as described in (A) and additionally $R^*Si(OR)_3$; and (III) a catalyst as described in (C).

The alkoxysilicon compound of (A) and (II) is a compound of the general formula $Si(OR)_4$ where R is methyl or ethyl and is illustrated by tetramethyl orthosilicate and tetraethyl orthosilicate or a compound of the general formula $(RO)_3Si-X-Si(OR)_3$ in which R is methyl or ethyl and X is a divalent radical selected from $-(CH_2)_n-$ where n is an integer of 1 to 10, preferably 2; $-C_6H_4-$;

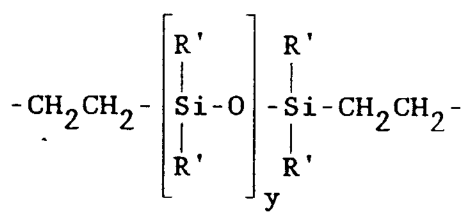

where each R' is independently selected from an aliphatic hydrocarbon radical and an aromatic hydrocarbon radical; and $-(OR''_2SiO)_m-$ in which R'' is selected from the group consisting of -OR and R' and m has a value of from 0 to 10 inclusive. The alkoxysilicon compound is preferably the compound of the formula $(RO)_3Si-X-Si(OR)_3$. The alkoxysilicon compound of (II) can also be $R^*Si(OR)_3$ in which R* can be an alkyl such as methyl, ethyl, propyl, butyl, pentyl, hexyl, alkenyl such as vinyl or allyl, acryl functional alkylene such as gamma-methacryloxypropyl, gamma-acryloxybutyl and gamma-acryloamidopropyl and glycidoxylpropyl. Examples of these $R^*Si(OR)_3$ alkoxysilicon compounds include methyltrimethylsilane, methyltriethoxysilane, ethyltriethoxysilane, vinyltrimethyloxysilane,

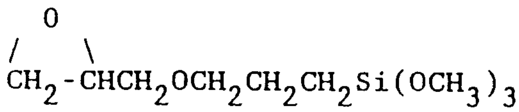 and 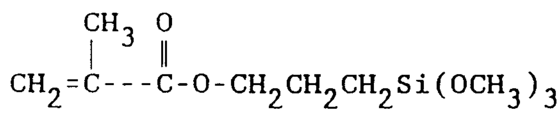

The alkoxysilicon compounds of either (A) or (II) where X is $-(CH_2)_n-$ can be illustrated by bis-(trimethoxysilyl)ethane, bis(trimethoxysilyl)propane, bis(triethoxysilyl)ethane, bis(triethoxysilyl)propane, bis-(trimethoxysilyl)butane, bis(trimethoxysilyl)isobutane, bis(triethoxysilyl)hexane and bis(trimethoxysilyl)-decane. These compounds can be synthesized by reacting chloroalkyltrialkoxysilane with tetraalkoxysilane in the presence of lithium. Such methods are well known in the art.

The alkoxysilicon compounds in which X has the formula

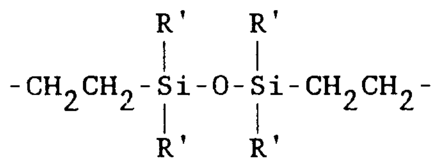

are illustrated by

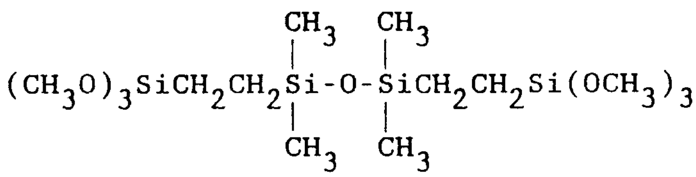

and

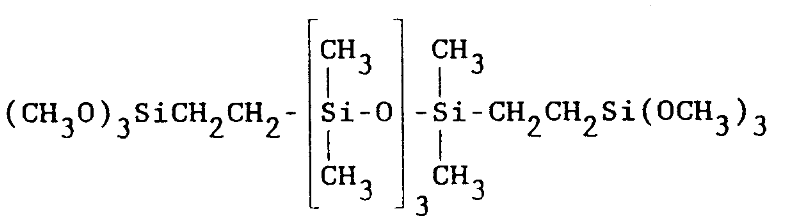 .

The adhesion additives which provide the best results are those made using bis-(trimethoxysilyl)ethane, which has the formula

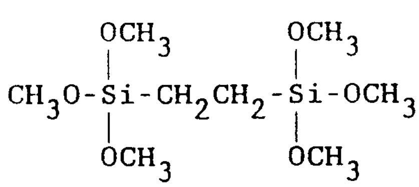 .

Reaction product (I) is prepared by reacting the alkoxysilicon compound of (A) with a polydiorganosiloxane of (B) having hydroxyl groups on the terminal silicon atoms of a formula $HO(R^2{}_2SiO)_xH$ where $R^2$ is a monovalent hydrocarbon radical, independently selected from aliphatic hydrocarbon radicals, such as methyl, ethyl, vinyl, butyl and hexyl and aromatic hydrocarbon radicals such as phenyl. The preferred $R^2$ groups are methyl and vinyl. The polydiorganosiloxane is a low molecular weight polymer having an

average value for x of from 3 to 50, preferably from 5 to 15.

The polydiorganosiloxanes of (B) are illustrated by hydroxyl endblocked poly(dimethylsiloxane), hydroxyl endblocked poly(methylphenylsiloxane), hydroxyl endblocked poly(methylvinylsiloxane), hydroxyl endblocked poly-co-(dimethylsiloxane-methylvinylsiloxane) and hydroxyl endblocked poly-co-(dimethylsiloxane-methylphenylsiloxane).

(C) is a catalyst which promotes the reaction between the alkoxy groups of (A), the ≡SiOR groups and the hydroxyl groups of (B) without causing equilibration of the polydiorganosiloxane.

The compound which acts as a catalyst, ingredient (C), is a compound which causes a reaction between two silicon-bonded alkoxy groups or between an alkoxy group and a hydroxyl group on another siloxane compound or a substrate, which can include the organotin compounds and organotitanates. Of the compounds of ingredient (c), the organotitanates are preferred because they provide the optimum properties. A catalytic quantity of (c) is used, such as 0.1 to 2 weight percent based on the total weight of (A), (B) and (C), preferably from 0.5 to 1.5 weight percent. The reaction between (A) and (B) is preferably carried out by heating.

Ingredient (C), as well as ingredient (III), can be an organotin compound such as stannous carboxylates or diorganotin dicarboxylates. Stannous carboxylates can be illustrated by stannous octoate, stannous 2-ethylhexoate, stannous neodecanoate, stannous isooctanoate, stannous isodecanoate and stannous 2'2'-dimethyldecanoate. Diorganotin dicarboxylates can be illustrated by dibutyltin diacetate, dibutyltin dilaurate, dibutyltin dioctoate and dimethyltin dilaurate.

Ingredient (C), as well as ingredient (III) can be an organotitanate such as a tetraalkyltitanate which can be illustrated by tetrabutyltitanate, tetraisopropyltitanate, tetramethyltitanate and tetraoctyltitanate or a chelated titanium compound such as those of the formulae

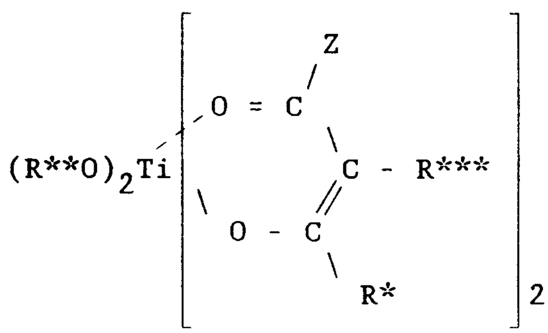

and

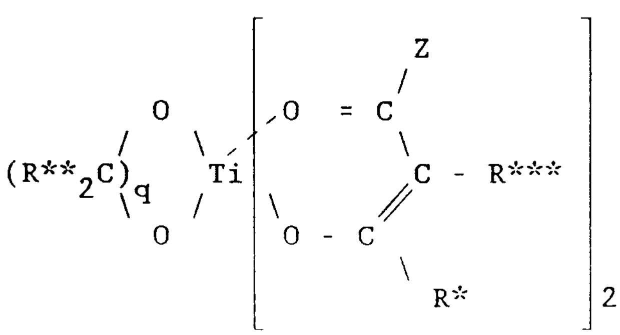

in which $R^*$ is an alkyl radical or a $-(CH_2CH_2)-$ bonded to $-(CH_2CH_2)-$ of $R^{***}$, $R^{**}$ is an alkyl radical or a hydrogen atom, Z is an alkyl radical, an alkoxy radical or amino radical, $R^{***}$ is an alkyl radical, a hydrogen atom, acetyl radical or a $-(CH_2CH_2)-$ bonded to the $-(CH_2CH_2)-$ of $R^*$, q is an integer of from 2 to 6 inclusive. Examples of the chelated titanium compounds are diisopropoxy titanium bis-(ethyl acetoacetonate), diisopropoxy titanium bis-(methyl acetoacetonate), diisopropoxy titanium bis-(acetylacetonate), dibutoxy titanium bis-(ethyl acetoacetonate), dimethoxy titanium bis-(methyl acetoacetonate),

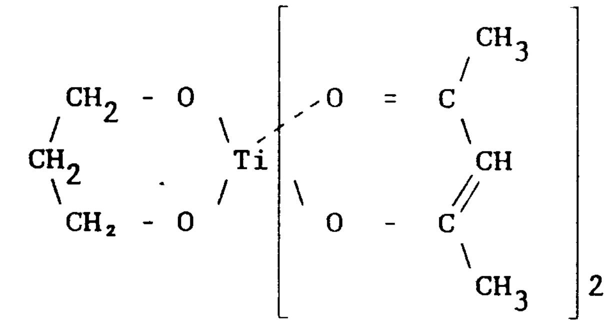

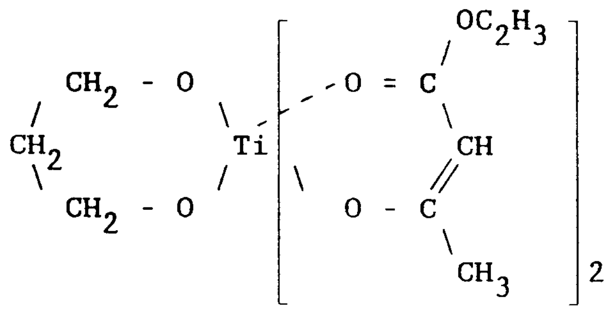

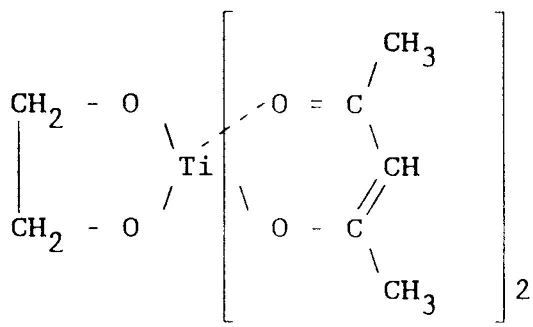

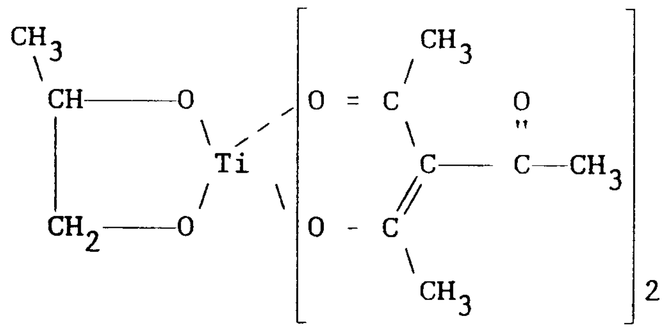

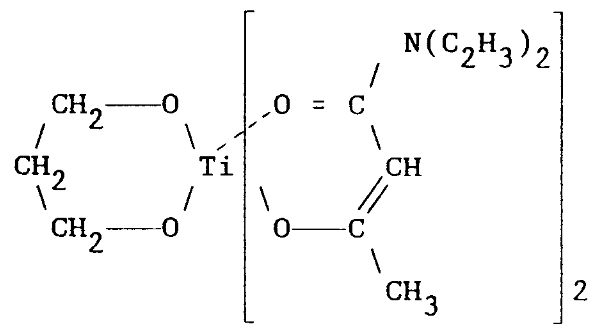

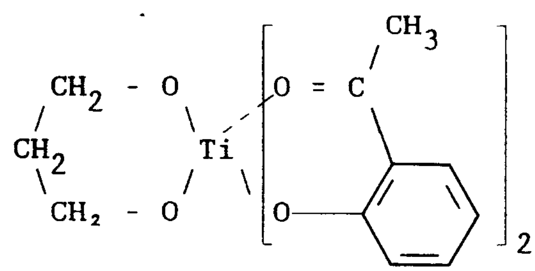

Of the preferred organotitanates, tetrabutyltitanate is the most preferred as ingredient (C) and as ingredient (III).

The reaction between (A) and (B) in the presence of a catalytic amount of a compound {the preparation of the reaction product of (I)} is carried out by heating a mixture of (A), (B) and (C) at a temperature of from 50°C. to 90°C. for a sufficient time to essentially eliminate the hydroxyl content of (B), such as from 5 hours to 2 days. The reaction should be carried out under conditions which avoid moisture contact because the alkoxysilicon compound, titanates and the reaction product are sensitive to moisture. After the reaction is completed, the by-produced alcohol can be removed by stripping under reduced pressure. The reaction product should be stored in a container which prevents the ingress of moisture. Preferably, (A), (B) and (C) are mixed and heated at 60°C. to 80°C. for 10 to 30 hours. The amount of (A) and (B) are such that there is from 2 to 15 moles of silicon-bonded alkoxy of (A) per mole of hydroxyl group in (B), preferably from 5 to 15 moles of alkoxy group of (A) per mole of hydroxyl group of (B).

The reaction product (I) is then combined with (II) alkoxysilicon compound, the same as described for (A) and with (III) a compound which is a catalyst for the adhesion reaction between a coating and a substrate, these compounds can be the same as described for (C). The adhesion additive is a mixture of (I), (II) and (III) where the preferred proportions are such that (I) is present in 20 to 75 weight percent, (II) is present in 20 to 75 weight percent and (III) is present in an amount of from 1 to 50 weight percent, preferably from 3 to 12 weight percent. The weight percentage of (I), (II) and (III) are based on the total weight of (I), (II) and (III) as being 100 weight percent.

The adhesion additive is used to promote adhesion in ultraviolet radiation curable siloxane compositions, especially compositions based on acrylamide functional polyorganosiloxanes. The degree of adhesion will vary with the amount of adhesion additive used, with the kind of reaction product of the adhesion additive and with the nature or kind of ultraviolet radiation curable siloxane mixture being used. Preferably, the adhesion additive (2) is used in amounts of from 0.1 to 5 weight percent based on the weight of (1) a mixture of ultraviolet radiation activatable siloxane polymer and photoinitiator and (2) an adhesion additive consisting essentially of (I), (II) and (III).

A combination of adhesion additive (2) and ultraviolet radiation curable siloxane composition (1) provides adhesion to substrates when the curable composition is cured in contact with the substrate. The ultraviolet radiation curable siloxane composition of this invention is obtained by mixing (1) and (2). (2) can be added to (1) as a mixture or (2) can be added to (1) by adding (I), (II) and (III) separately. It is preferred to add (III) to (1), then (II) is added and finally (I) is added. (1) is a composition which cures when exposed to ultraviolet radiation and is based on at least one ultraviolet radiation activatable siloxane polymer and a photoinitiator which is activated by ultraviolet radiation. (2) is the adhesion additive mixture as described above.

Mixture (1) is at least one ultraviolet radiation activatable siloxane polymer which will cure when exposed to ultraviolet radiation and form crosslinked product in the presence of photoinitiator which is activated by ultraviolet radiation. This mixture can contain other siloxane ingredients, organic compounds, reinforcing agents and other compounds which are used with such siloxane compositions.

The preferred UV curable material useful in mixture (1) as the base polymer is a siloxane which is a polydiorganosiloxane having at least two functional acrylamide groups. These polydiorganosiloxanes are present in compositions which contain photoinitiator and other ingredients.

The acrylamide functional polyorganosiloxane of (1) can be an acrylamide polyorganosiloxane having at least two groups which have acrylamide group functionality bonded to silicon atoms through Si-C bonds and on the average at least 20 but less than 1500 siloxane units per molecule, the organic groups bonded to the silicon atoms other than those having the acrylamide group functionality are selected from the group consisting of methyl and phenyl. Mixture (1) also comprises from 0.5 to 10 weight percent of a photoinitiator which is compatible with the acrylamide functional polyorganosiloxane.

The acrylamide functional groups can be either on the terminal silicon atoms of the polymer chain or they can be pendent on silicon atoms along the polymer chain. The remaining organic groups bonded to the silicon atoms of the polyorganosiloxane are methyl or phenyl, where the methyl are preferred for economical reasons, the combinations of methyl and phenyl can be useful for providing compatible compositions with reactive diluents and photoinitiators. Acrylamide functional polydiorganosiloxanes are known in the art from Varaprath in U.S. Patent No. 4,608,270, issued August 26, 1986. The polyorganosiloxanes preferably contain from 20 to 1500 siloxane units and at least two acrylamide groups. The siloxane units can include dimethylsiloxane units, diphenylsiloxane units, methylphenylsiloxane units, trimethylsiloxy units, dimethylphenylsiloxy units and siloxane units of the formula

$$WG^{*}N(Q'G^{*}N)_{d}Q\overset{\displaystyle A^{*}_{c}}{\overset{|}{Si}}O_{(3-c)/2}$$

in which W is H or G'', G'' is a monovalent hydrocarbon radical, A* is methyl or phenyl, Q and Q' are divalent hydrocarbon radicals, G* is an acyl radical having the formula

$$CH_2=CG^{**}\overset{\displaystyle O}{\overset{\|}{C}}-$$

where G** is H or $CH_3$, $c$ is 1 or 2 and $d$ is 0 or 1. The monovalent hydrocarbon radicals, G'', can be alkyl radicals such as methyl, ethyl, propyl, butyl, hexyl and octyl; cycloaliphatic radicals such as cyclohexyl; aryl radicals such as phenyl, benzyl, styryl, tolyl and xenyl; and alkenyl radicals such as vinyl and allyl. Q and Q' are divalent hydrocarbon radicals such as ethylene, propylene, isopropylene, butylene, isobutylene, hexylene, octylene and phenylene. Q is preferably ethylene and Q' is preferably propylene or isobutylene. When G** is hydrogen, the acyl radical is acrylyl radical and when G** is methyl, the acyl radical is methacrylyl radical. Polydimethylsiloxanes endblocked with

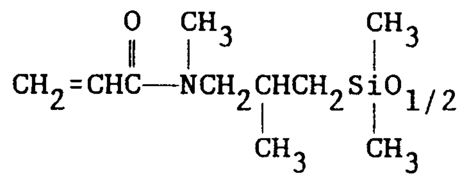

are preferred when the molecular weight is on the low end of the range, such as from 50 to 250 siloxane units and when low viscosities are desired. The polydimethylsiloxanes which contain pendent or both pendent and terminal acrylamide functional groups are preferred when a higher crosslinked density is desired, such as to make tougher materials.

The photoinitiator or photosensitizer is a compound which will initiate a crosslinking reaction of groups bonded to silicon atoms particularly the reactive unsaturated groups, such as the acrylamide groups, when irradiated with ultraviolet light. The photosensitizer is compatible in the composition. Compatibility of the photosensitizer can be determined by mixing the ingredients and the photosensitizing compound in an amount of one weight percent based on the weight of the composition and then mixing for up to 16 hours at room temperature, heating at 80 °C. for up to four hours or both. The photosensitizer is said to be compatible if the composition is clear and the photosensitizer has dispersed. Besides compatibility, the photosensitizer should not cause the composition to react undesirably, such as gelling during storage. Some compounds which can be used as photoinitiator are: benzophenone, trimethylsilylated benzophenone, acetonaphthenone, propiophenone, 3-methylacetophenone, 4-methylacetophenone, benzoin ethyl ether, a dimethylpolysiloxane whose two terminals are bonded to benzoin through an ether linkage, acetophenone, benzoin methylether, benzoin isobutylether, 2,2-diethoxyacetophenone,

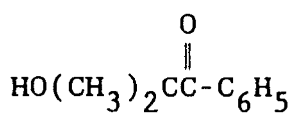 and

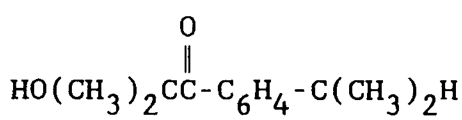 .

The most preferred photosensitizers are 2,2-diethoxyacetophenone and

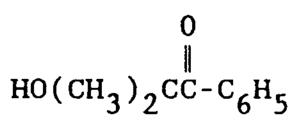 .

Polysilanes are also useful as photoinitiators. The polysilanes can be the phenylmethylpoly-silanes defined by West in U.S. Patent No. 4,260,780, issued April 7, 1981; the aminated methylpolysilanes defined by Baney et al. in U.S. Patent No. 4,314,956, issued February 9, 1982; the methylpolysilanes of Peterson et al. in U.S. Patent No. 4,276,424, issued June 30, 1981; and the polysilastyrene defined by West et al. in U.S. Patent No. 4,324,901, issued April 13, 1982.

A viscosity stabilizer useful in these inventive compositions is a free radical scavenger, such as p-methoxyphenol (also known as monomethyl ester of hydroquinone, MEHQ), catechol, 4-t-butylcatechol, phenothiazine, hydroquinone, 2,6-di-t-butyl-p-methylphenol and N-phenyl-2-naphthylamine. The free radical scavenger viscosity stabilizers are used in amounts of preferably of zero to one weight percent based on the weight of the composition, more preferably from 0.01 to 0.1 weight percent. The most preferred free radical scavenger viscosity stabilizer is MEHQ.

Additives which might be used include fillers such as fumed silica, quartz powder, glass fiber, alumina and metal carbonates such as calcium carbonate and magnesium carbonate.

The acrylamide siloxane compositions can contain a reactive diluent to reduce the viscosity of the composition and to provide tougher cured films and coatings. The reactive diluent must be compatible with

the rest of the ingredients of the composition and react during the curing processes so that they become part of the cured product. Reactive diluents which were found to be especially useful for these compositions include isobornyl acrylate, cyclohexyl acrylate and 2-ethylhexyl acrylate. The compositions can also contain small amounts of multifunctional acrylates, such as up to 10 weight percent based on the weight of the composition. In compositions which are used for purposes other than conformal coatings, the kinds and amounts of reactive diluents will vary, such as the use of diacrylates and multifunctional acrylates.

These acrylamide siloxane compositions are solventless, can be made with low viscosities and can be cured to flexible materials which can exhibit cold temperature flexibility. Being solventless and low in viscosity is a desirable combination for coatings such as would be useful as conformal coatings for printed circuit boards, especially when they have dual cure, UV and moisture and when the resulting cured films and coatings have low temperature flexibility.

These acrylamide siloxane compositions are particularly useful as conformal coatings for printed circuit boards or printed wire boards, depending on the terminology one desires to use. Compositions which are especially useful coatings for these boards, have viscosities low enough so that the boards can be dip coated or spray coated and cure to an acceptable tough coating. Such compositions can have a viscosity at 25°C. in the range of 0.07 to 0.2 Pa•s and comprise at least 20 weight percent of polydimethylsiloxane having acrylamide functional groups at the polymer ends; at least 20 weight percent of polydiorganosiloxane having endgroups containing both alkoxy groups and methacrylate groups where there are two alkoxy groups per endgroup bonded to silicon through an Si-O bond and one methacrylate group bonded to silicon through an Si-C bond and having less than 350 diorganosiloxane units per molecule, where said diorganosiloxane units are selected from the group consisting of dimethylsiloxane units, diphenylsiloxane units and methylphenylsiloxane units wherein at least 50 percent of the organic groups of the diorganosiloxane units are methyl; at least 20 weight percent of a reactive diluent selected from the group consisting of isobornyl acrylate, cyclohexyl acrylate and 2-ethylhexyl acrylate, 0.5 to 10 weight percent of a compatible photoinitiator and 0.05 to 1 weight percent of an organic titanate.

A specific acrylamide siloxane composition which is useful as mixture (1) is designed to cure by exposure to ultraviolet radiation in an air atmosphere and be useful as a conformal coating, is disclosed in U.S. Patent No. 4,824,875, issued April 25, 1989, which shows such conformal coating compositions which can be used as mixture (1) of this invention. These acrylamide siloxane compositions will be referred to herein as conformal coating compositions.

The conformal coating compositions have dual cure properties, i.e., ultraviolet radiation cure and moisture cure. These compositions are designed to be used as conformal coatings and have uncured properties, curing characteristics and cured properties which makes them particularly useful to coat printed circuit boards or printed wire boards.

Other UV curable compositions based on other polymeric species may also exhibit improved adhesion by using the adhesion additive mixtures of the present invention. One such curable material, as mixture (1) comprises (a) a vinyl functional polydiorganosiloxane in which there is at least two vinyl functional groups per molecule, (b) a mercapto functional compound having at least two mercapto groups per molecule. In this mixture, the number of vinyl groups per molecule plus the number of mercapto groups per molecule is at least five to obtain satisfactory cure. These curable materials can be illustrated by a preferred embodiment described by Chi-long Lee and Michael A. Lutz in U.S. Patent No. 4,780,486, which shows these curable materials and their preparation.

Another example of a UV curable material as mixture (1) is a vinyl/SiH composition which is a mixture of a vinyl functional polydiorganosiloxane in which there is at least two vinyl functional groups per molecule, a silicon bonded hydrogen compound having at least two silicon-bonded hydrogen atoms per molecule and there is at a total of at least five vinyl functional groups and silicon-bonded hydrogen atoms in this mixture. Such a composition is described by Gant in U.S. Patent No. 4,064,027, issued December 20, 1977, which shows such compositions and their preparation.

Another useful UV curable siloxane composition, as mixture (1) is described by Michael A. Lutz, in copending application Serial No. 07/335,908, filed April 10, 1989, entitled "Ultraviolet Cured Gels With Controlled Modulus and Viscosity" which shows acryl functional siloxane gel compositions as mixture (1) of the present invention. These compositions as mixture (1) comprise a blend of acryl functional polydiorganosiloxanes and a photosensitization system for curing the blend when irradiated with ultraviolet radiation, wherein the blend is 4 to 90 mole percent of an acryl functional endblocked polydiorgano-siloxane of the general formula $A^2R^4{}_2SiO(R^5{}_2SiO)_pSiR^4{}_2A^2$, 9 to 50 mole percent of a mono-acryl functional endblocked polydiorganosiloxane of the general formula $R^4{}_3SiO(R^5{}_2SiO)_pSiR^4{}_2A^2$, and 0 to 65 mole percent of a non-functional polydiorganosiloxane of the formula $R^4{}_3SiO(R^5{}_2SiO)_pSR^4{}_3$ where, in the above formulae, $R^5$ is a monovalent radical selected from the group consisting of alkyl, aryl and fluorinated alkyl; each $R^4$ is

independently selected from the group consisting of $R^5$, hydroxyl and a hydrolyzable group, $A^2$ is an acryl functional radical bonded to silicon atom through silicon-carbon bond where the acryl function has the formula

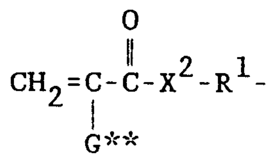

or the formula

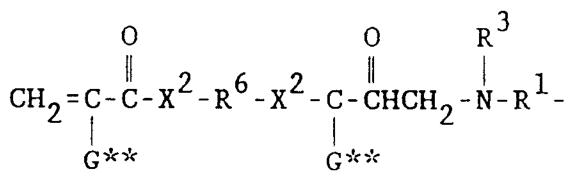

in which G** is hydrogen atom or methyl, $X^2$ is divalent oxygen or $-N(R^3)-$, $R^3$ is hydrogen atom or an alkyl of 1 to 4 carbon atoms, $R^1$ is a divalent hydrocarbon radical having from 1 to 10 carbon atoms per radical, $R^6$ is a divalent hydrocarbon radical or a divalent hydrocarbon radical containing ether linkages and p has a value of from 30 to 3,000, the mole percentages being based on the total blend as 100 mole percent and where the polydiorganosiloxanes of the blend are present in amounts to provide 20 to 95 percent of the endblocking as acryl functionality and 5 to 80 percent of the endblocking as non-functional.

The acryl functionality can be many kinds and for these blends, the term "acryl functional" or "acryl functionality" refers to the following groups: acrylate ($CH_2=CHCOO-$), methacrylate $\{CH_2=C(CH_3)COO-\}$, N-alkyl-N-acrylamide $\{CH_2=CON(R^3)-\}$ and N-alkyl-N-methacrylamide $\{CH_2=C(CH_3)CON(R^3)-\}$, wherein $R^3$ is defined above. Some examples of acryl functionality include acryloxyalkyl functional, methacryloxyalkyl functional, acrylamidoalkyl functional and methacrylamidoalkyl functional. These kinds of acryl functionalities on a variety of polyorganosiloxanes are known in the art and can be made by many methods described therein. These particular blends are unique and offers unique advantages for compositions which cure upon exposure to ultraviolet radiation and are useful for coating or encapsulating electronic devices with delicate features such as fine wire bonds.

The acryl functional polydiorganosiloxanes are those which have two acryl functions per molecule, one per terminating or endblocking siloxane unit. These acryl functional polydiorganosiloxanes can be those in which $R^5$ is a monovalent radical such as an alkyl radical, such as methyl, ethyl, propyl, butyl and cyclohexyl; an aryl radical such as phenyl, 2-phenylethyl and benzyl; or a fluorinated alkyl radical such as 3,3,3-trifluoropropyl, 2-(perfluoroethyl)ethyl and 2-(perfluorobutyl)ethyl. Each $R^4$ is independently selected from hydroxyl, a radical represented by R or a hydrolyzable radical bonded to silicon atom such as alkoxy illustrated by methoxy, ethoxy, isopropoxy, butoxy and isobutoxy or other non-corrosive hydrolyzable groups such as isopropenoxy, acetamido and ketoximo. The acryl functional polydiorganosiloxanes can have a degree of polymerization such that the value of p ranges from 30 to 3,000, preferably from 50 to 1,000 in which the preferred diorganosiloxane units are selected from the group consisting of dimethylsiloxane, phenylmethylsiloxane, diphenylsiloxane and methyl-(3,3,3-trifluoropropyl)siloxane. The acryl functionality, $A^2$, is bonded to silicon atoms at the end of the polydiorganosiloxane molecules through silicon-carbon bonds.

In the acryl groups, G** is a hydrogen atom or methyl, $X^2$ is divalent oxygen or a divalent radical of the formula $-N(R^3)-$ and $R^3$ is a hydrogen atom or an alkyl of 1 to 4 carbon atoms, such as methyl, ethyl, propyl, isopropyl, butyl, isobutyl, tertiary butyl. $R^1$ is a divalent hydrocarbon radical having 1 to 10 carbon atoms per radical such as methylene, ethylene, butylene, hexylene, propylene, decylene, $-C_6H_4-$, $-CH_2CH_2C_6H_4-$,

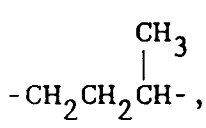 , 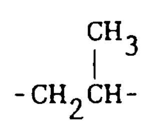 and 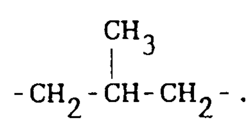 .

where the preferred $R^1$ are those having 2 to 6 carbon atoms per radical such as ethylene, propylene, isopropylene, butylene, isobutylene, tertiary butylene, pentylene and hexylene. $R^6$ is a divalent hydrocarbon radical or a divalent hydrocarbon radical containing ether linkages. Examples of $R^6$ as a divalent hydrocarbon radical include methylene, ethylene, propylene, butylene, hexylene, decylene,

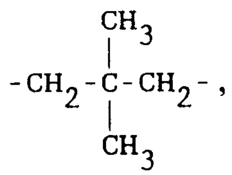 , 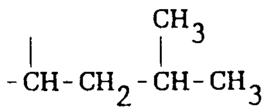 and 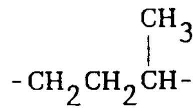 ;

and as a divalent hydrocarbon radical containing ether linkages includes $-CH_2CH_2-O-CH_2CH_2-$, $-(CH_2CH_2O)_3-CH_2CH_2-$,$-(CH_2CH_2CH_2O)_2-CH_2CH_2CH_2-$, $-(CH_2CH_2O)_8-CH_2CH_2-$,

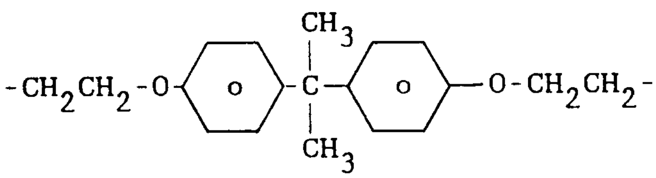 ,

$-(CH_2CH_2CH_2CH_2O)_{7.8}-CH_2CH_2CH_2CH_2-$, $-(CH_2CH_2O)_2-CH_2CH_2-$and

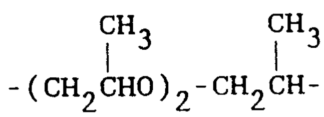 .

The acryl functional polydiorganosiloxane can be prepared by the methods described by Pigeon in U.S. Patent No. 4,290,869, issued September 22, 1981, which shows the siloxanes and their preparation using organotitanate as a catalyst. Lein et al, U.S. Patent No. 4,528,081, issued July 9, 1985, shows the preparation of polydiorganosiloxane like those described by Pigeon. Nakos et al in U.S. Patent No. 4,699,802, issued October 13, 1987, shows acryloxyalkyl functional polydiorganosiloxanes which contain hydrolyzable functionality other than alkoxy, such as oxime, N-alkylamido and isopropenoxy. Lin et al in U.S. Patent No. 4,503,208, issued March 5, 1985, shows acryl functional polydiorganosiloxanes prepared by reacting in the presence of an addition catalyst such as a platinum catalyst, an SiH endblocked polydiorganosiloxane and propargyl acrylate or propargyl methacrylate.

Acryl functional polydiorganosiloxanes can be those in which the acryl functionality is acrylamide, especially N-alkyl-N-acrylamide or N-alkyl-N-methacrylamide. The amide polyorganosiloxane having acryl functionality contains two acrylamide functional groups bonded to silicon atoms through Si-C bonds on the terminal silicon atoms of the polymer chain. The remaining organic groups bonded to the silicon atoms of the polyorganosiloxane are defined above for R and are preferably methyl, phenyl or 3,3,3-trifluoropropyl. The acrylamide functional polydiorganosiloxanes are known in the art from Varaprath in U.S. Patent No. 4,608,270, as cited herein.

The mono-acryl functional endblocked polydiorganosiloxanes are not particularly well known but can be prepared by many of the methods used to prepare the acryl functional polydiorganosiloxanes of (F). The mono-acryl functional endblocked polydiorganosiloxanes of (H) are made by first preparing a polydiorganosiloxane in which some of the endblocking units are triorganosiloxy in which the organic groups are alkyl, aryl or fluoroalkyl and the remainder of the endblocking units are hydroxyl. Dupree shows such polymers.

The mono-acryl functional endblocked polydiorganosiloxanes can be prepared by several methods by selecting the proper starting materials. It is difficult to prepare the polydiorganosiloxanes in the pure form, that is, where all the molecules have one non-functional endblock and one acryl functional endblock. Most of the economical methods of the preparation of polydiorganosiloxanes involves the use of equilibration methods and these methods produce statistical distributions of molecular species. For example, the preparation of polydiorganosiloxane in which the acryl functional endblock is made by the method of

reacting a silane with hydroxyl endblocked polydiorganosiloxane in the presence of a catalyst such as described by Pigeon, Lein et al, Nakos et al and Lin et al can be used if a starting polydiorganosiloxane is one in which some of the molecules have one hydroxyl endblock and one non-functional endblock such as trimethylsiloxy unit. Such polydiorganosiloxanes are known from Dupree which to shows the polydiorganosiloxane with some of the molecules having one hydroxyl endblock. Polydiorganosiloxanes used can be controlled best by selecting a method which will provide the desired number of molecules with one hydroxyl endblock. The number of acryl functional endblocked polydiorganosiloxane molecules and the number of non-functional polydiorganosiloxanes can then be varied to make a variety of blends. Starting with a polydiorganosiloxane with hydroxyl endblocks such as described by Dupree, one can use the method of reacting an acryl functional/alkoxy silane with these polydiorganosiloxanes in the presence of a condensation catalyst such as organotitanates to make the mono-acryl functional endblocked polydiorganosiloxane. Similarly, other methods can be used to make various kinds of polydiorganosiloxanes such as those described for making the acryl functional endblocked polydiorganosiloxane except that the starting ingredients include a precursor for providing some non-functional endblocking groups.

The non-functional endblocked polydiorganosiloxanes are well known in the art and can be obtained commercially. These non-functional polydiorganosiloxanes are also produced by the methods of making polydiorganosiloxanes which use equilibration techniques.

The blends are those composed of 20 to 95 percent of the endblocks as acryl functionality and 5 to 80 percent of the endblocks as non-functional. The preferred blends contain 45 to 80 percent acryl functional endblocks and 20 to 55 percent non-functional endblocks.

Lee et al in U.S. Patent No. 4,697,026, issued September 29, 1987, teach acryl functional endblocked polydiorganosiloxanes which are made by a Michael addition of diacrylate or dimethacrylate functional compounds with secondary amine functional polydiorganosiloxanes. Lee et al show the preparation of polymers which use the Michael addition method.

Compositions described in our copending application entitled "Ultraviolet Curable Phenyl Containing Compositions," Serial No. 07/335,638, filed April 10, 1989, show additional acrylamide functional siloxane compositions for mixture (1). These compositions are compatible mixtures of acrylamide functional polyorganosiloxanes having an average unit formula $Y^2_gR^7_hSiO_{(4-g-h)/2}$ in which $R^7$ is a monovalent organic group where at least 5 to 50 mole percent of $R^7$ are aromatic based on all $R^7$ equal to 100 mole percent, $Y^2$ is an acrylamide functional group bonded to the silicon atom through a silicon-carbon bond, g has a value such that there is on the average at least 0.4 acrylamide functional groups per molecule, h has a value such that the polyorganosiloxane can be applied to a substrate and cured by exposure to ultraviolet radiation and the sum of g + h is at least 0.7 and a photosensitization system.

The polyorganosiloxanes contain acrylamide functionality and from 5 to 50 mole percent aromatic, preferably from 20 to 50 mole percent, based on the total number of the organic groups on the silicon atoms, less the acrylamide functional groups. They can contain any combination of siloxane units and therefore the structure will vary widely and include linear, branched, three dimensional network, cyclic and the like. The siloxane units can be monoorganosilsequioxane, diorganosiloxane, triorganosiloxy and $SiO_2$. The acrylamide functionality can be on any of the organic group-containing siloxane units, however, the preferred polyorganosiloxanes are the linear polydiorganosiloxanes which are essentially composed of diorganosiloxane units.

These acrylamide functional polyorganosiloxanes are a unique class of siloxane polymers for use in ultraviolet radiation curable compositions. These polyorganosiloxanes exhibit a number of improvements for such compositions. The improvement is a result of the amount of aromatic groups which the polyorganosiloxane contains. These aromatic-containing acrylamide functional polyorganosiloxanes have a compatibility with a greater number of non-silicon compounds, such as photoinitiators, reactive diluents, adhesion additives, flow control agents and stability additives, than acrylamide functional polyorganosiloxanes which contain less than 5 mole percent aromatic groups on the siloxane polymer. The number of non-silicon compounds which are compatible with these siloxane polymers increases as the aromatic content of the polyorganosiloxane increases. These polyorganosiloxanes provide compositions which cure to products having improved low temperature flexibility and contrary to the teachings of the art, such as Sato et al in U.S. Patent No. 4,364,809, issued December 21, 1982, compositions which contain the aromatic containing acrylamide functional polyorganosiloxanes can cure faster as the mole percentage of aromatic groups increases.

Ingredients of compositions made from the aromatic group-containing, acrylamide functional polyorganosiloxanes which show improved compatibility are the photoinitiators. The photoinitiator is used in amounts sufficient to provide the desired cure of the composition. The amount of photoinitiator can be increased as the mole percentage of aromatic group increases in the acrylamide functional polyorganosiloxane because the compatibility of the photoinitiator in the composition increases. Polyorganosiloxanes which contain no aromatic groups limit both the kind and amount of photoinitiator which can be used in ultraviolet radiation curable compositions because they are incompatible at higher concentrations or because they become incompatible as the composition cures and precipitate from the material. This unique class of acrylamide functional polyorganosiloxanes provides the ability to make compositions which can have cure characteristics designed for the specific application and the kind and amount of photoinitiator can be selected to achieve the desired results without having the compatibility of the photoinitiator in the composition dictating the cure characteristics.

The photosensitization system is in the simplest form, a photoinitiator. It can also include other ingredients which provide some function to the photocurable process, such as the presence of chain transfer agents, like an amine, especially tertiary amines and photosensitizers as described herein. Other ingredients are known in the art. Examples of photoinitiators include those described herein.

Reactive diluents are often used in ultraviolet radiation curable compositions to provide crosslinking and to reinforce and strengthen the cured products. However, polyorganosiloxanes do not readily make compatible compositions with these reactive diluents and the choice of the kind and amount of reactive diluent is limited because of this incompatibility problem. Limiting the kinds and amounts of reactive diluents also limits the properties which can be achieved with ultraviolet radiation curable compositions based on polyorganosiloxanes, for example the acrylamide functional polyorganosiloxanes. The unique class of aromatic group containing, acrylamide functional polyorganosiloxanes provides a broader spectrum of kinds of reactive diluents and amounts of such reactive diluents which can be used to make ultraviolet radiation curable compositions. In U.S. Patent No. 4,824,875, issued April 25, 1989, to Beth I. Gutek, the reactive diluents are limited to isobornyl acrylate, cyclohexyl acrylate and 2-ethylhexyl acrylate because others are incompatible and of these three reactive diluents, the isobornyl acrylate is the preferred because of the compatibility with the polyorganosiloxanes of the composition which are methylsiloxanes. Isobornyl acrylate is useful but has a very undesirable odor. The use of the aromatic group containing, acrylamide functional polyorganosiloxanes having from 5 to 50 mole percent aromatic groups bonded to the silicon atoms permits one to select many other kinds of reactive diluents and thus the odor can be eliminated or at least substantially reduced. In addition to the above reactive diluents, others which are compatible with the polyorganosiloxanes containing the aromatic groups include hexanediol diacrylate, butanediol diacrylate, trimethylolpropane trimethacrylate, vinyl acetate, tetrahydrofurfuryl acrylate, trimethylolpropane triacrylate, phenoxyethyl acrylate and tripropylene glycol diacrylate.

These acrylamide functional polyorganosiloxanes contain organic groups bonded to the silicon atoms (other than the acrylamide functional groups) which are from 5 to 50 percent aromatic, preferably phenyl, with the remainder being other organic groups, preferably methyl. $R^7$ represents the organic groups which are non-acrylamide functional and which are from 5 to 50 percent aromatic. $R^7$ is a monovalent radical where 5 to 50 mole percent are aryl radicals such as phenyl, 2-phenylethyl and benzyl and the remainder are alkyl radicals such as methyl, ethyl, propyl, butyl and cyclohexyl or a fluorinated alkyl radical such as 3,3,3-trifluoropropyl, 2-(perfluoro-ethyl)ethyl and 2-(perfluorobutyl)ethyl. $Y^2$ is an acrylamide functional group bonded to the silicon atoms through a silicon-carbon bond. These acrylamide functional groups are preferably acrylamidoalkyl or methacrylamidoalkyl. g represents the number of $Y^2$ groups per silicon atom of the average unit formula and has a broad range, but should be such that there is at least 0.4 acrylamide functional groups per molecule and can be as high as 0.5 acrylamide functional groups per silicon atom of the average unit formula. However, the preferred acrylamide functional polyorganosiloxanes which can be used to make compositions which can be applied to substrates and cured by exposure to ultraviolet radiation usually do not have more than 0.1 acrylamide functional groups per silicon atom. The preferred value of g is from 0.001 to 0.04. h has a value such that the resulting acrylamide functional polyorganosiloxane can be applied to a substrate and also cured by exposure to ultraviolet radiation. This value for h is such that the polyorganosiloxane can be used to make compositions have a viscosity or can be made to have a viscosity such as by admixture with reactive diluents where said compositions can be coated on substrates. h preferably will range from 0.7 to slightly above 2, such as 2.02. The sum of g + h is at least 0.7 and preferably ranges from 0.7 to 2.02.

The acrylamide functionality, $Y^2$ is bonded to silicon atoms of the polyorganosiloxane molecules through silicon-carbon bonds and has a formula

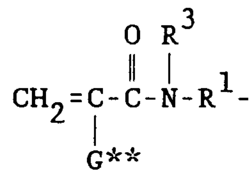

or the formula

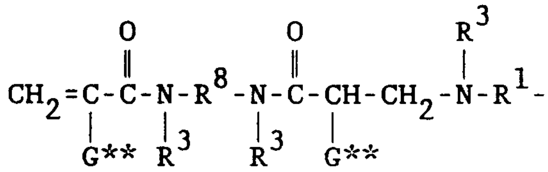

in which G**, $R^3$ and $R^1$ are defined above. $R^8$ is a divalent hydrocarbon radical. Examples of $R^8$ as a divalent hydrocarbon radical include methylene, ethylene, propylene, butylene, hexylene, decylene,

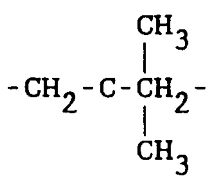 , 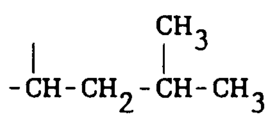 and 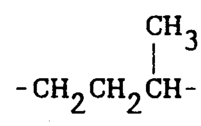 ;

Acrylamide functional polyorganosiloxanes which cure by exposure to ultraviolet radiation are known in the art, for example, Morehouse in U.S. Patent No. 2,929,829, issued March 22, 1960, teaches that acrylamide compounds can be made by reacting acyl halides with aminoalkyl silicon compounds to produce acylamide functional silicon compounds. Morehouse teaches the following reaction

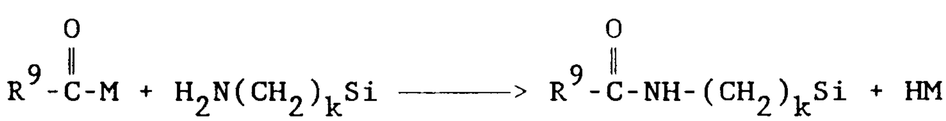

wherein $R^9$ is an alkyl, aryl, alkenyl or a monovalent heterocyclic ring, M is a halogen atom and k is an integer of at least 3. When $R^9$ is vinyl and M is chlorine, the halogen compound is acryloyl chloride and the product formed would be an acrylamide functional silicon compound. Morehouse shows a method of preparing acrylamide functional polyorganosiloxanes which can be used in this invention. The polyorganosiloxanes having acrylamide functionality are also taught by Varaprath in U.S. Patent No. 4,608,270.

The above compositions which are useful as mixture (1) can contain optional ingredients which may be suitable for some applications, however, those which effect the cure and/or the properties of the cured material should be evaluated for suitability to the specific application. In those applications in which the viscosity of the uncured material, electrical properties, corrosive nature of the composition both uncured and cured are important, the kind of optional ingredient should be carefully evaluated, especially when the compositions are to be used as a coating, encapsulant or potting compound for fragile electronic devices. Examples of optional ingredients which might be considered include surfactants, reinforcing agents such as fillers and resins, colorants and other property modifiers.

The compositions can be used in many kinds of applications in which curing by ultraviolet radiation is acceptable. Particularly suitable applications are those in which electrical and electronic equipment is to be protected such as for coating, encapsulating or potting electronic devices. The compositions of this invention cure to products which vary from hard resin type materials to elastomeric materials to soft gel materials. Some of the compositions are useful for paper coatings. Because the acrylamide functional polyorganosiloxanes can form compatible compositions with a wide variety of non-silicon compounds, the

kinds of cured products will vary widely in both physical and chemical properties and therefore the use to which they can be put will also vary widely. The compositions of this invention can exhibit the characteristic that they maintain many of their properties at low temperature, such as -60 ° C. flexibility.

The gel compositions are of particular interest because they rapidly cure when exposed to ultraviolet radiation, usually in a few seconds and because they are based on polyorganosiloxane, they are suitable for integrated circuit protection. These compositions have excellent purity, low moisture uptake, provide stress relief even at low temperatures, have excellent electrical properties, are thermally stable and can protect against harsh environments. Because of the nature of the gel compositions to independently vary the viscosity and the hardness, they are useful for photobarrier processing involving "in-situ" generation of flow barriers during material application and photoimaging to allow wafer stage application of permanent protective coatings. The compositions are shelf stable and can be shipped as a one package container product. The gel compositions can be used to protect integrated circuits and can be used in manufacturing where rapid processing is needed, such as automated production lines.

The ultraviolet-generating source useful for curing the compositions of the invention can be any such source known in the prior art, such as hydrogen discharge tubes, xenon discharge tubes, low-pressure mercury lamps, medium-pressure mercury lamps and high-pressure mercury lamps. The source of the ultraviolet radiation is not critical as long as cure can be obtained. It is preferred to use a broad spectrum wavelength ultraviolet source for radiating the composition to provide cure. Many sources are available commercially.

In the following examples, "part or parts" represent "part by weight or parts by weight", "%" represents "weight %" and the viscosity is at 25 ° C. unless otherwise stated.

Example 1

An acrylamide functional endblocked polydiorganosiloxane was prepared by the method described in U.S. Patent No. 4,861,906, issued August 29, 1989, to Varaprath et al. 43 Parts of an amino-isobutyl enblocked polydiorganosiloxane of the formula

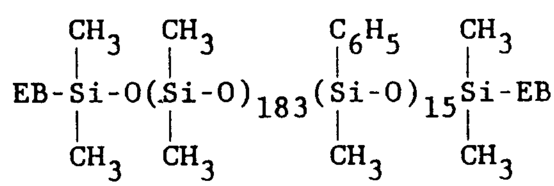

in which EB has the formula

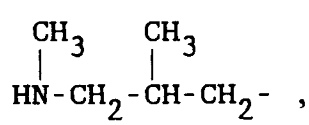

53 parts of heptane and 1.4 parts of sodium methoxide were charged into a reactor. The mixture was cooled to 0 ° C. and then 2.2 parts of acryloyl chloride in heptane was slowly added. The reacting mixture was warmed, was neutralized with sodium bicarbonate and was filtered to remove the sodium chloride produced during the reaction, unreacted sodium methoxide and sodium bicarbonate. To the resulting mixture, 0.002 part of p-methoxyphenol (MEHQ) and 0.001 part of phenothiazine was added and then the mixture was vacuum stripped to 50 ° C. to remove the heptane. The resulting product was an acrylamide functional polyorganosiloxane as described above where the acrylamide functionality of the endblocking groups EB have the formula

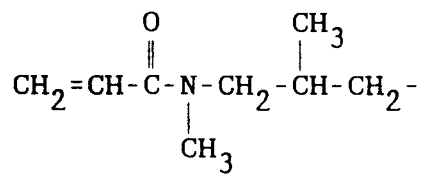

and had a viscosity of about 1.0 Pa.s (1,000 centipoise).

An ultraviolet radiation curable composition was prepared by mixing 98.5 parts of the acrylamide functional polydiorganosiloxane prepared above, 1.0 part of 2-hydroxy-2-methyl-1-phenylpropan-1-one and 0.5 part of tetrabutyltitanate. The above ultraviolet radiation curable composition was used to prepare test coatings compositions containing various additives for the purpose of evaluating them for adhesion to glass and aluminum substrates. The amount of additive in each test coating composition is a percentage based on 100 parts of ultraviolet radiation curable composition (10% = 10 parts additive per 100 parts composition). These adhesion additives were as follows:

Composition 1 (C-1) = no additive (comparative example).

Composition 2 (C-2) = 10 % of an adhesion additive prepared by making a blend of 11.6 parts of hydroxymethylvinylsilyl endblocked poly(methylvinylsiloxane) having an average of 10 methylvinylsiloxane units per molecule, 8.4 parts of $(CH_3O)_3SiCH_2CH_2Si(OCH_3)_3$ and 0.2 part of tetrabutyltitanate in a vial, sealing the vial and then heating at 70 °C. for 20.5 hours in a forced air oven to provide a reaction product (hereinafter referred to as RP-additive).

(comparative example)

Composition 3(C-3) = 10% of the compound of the formula $(CH_3O)_3SiCH_2CH_2Si(OCH_3)_3$ (comparative example).

Composition 4(C-4) = 5% RP-additive, 5% of the compound of the formula $(CH_3O)_3SiCH_2CH_2Si(OCH_3)_3$ and 0.5% of tetrabutyltitanate.

Composition 5(C-5) = 7.5% RP-additive, 2.5% of the compound of the formula $(CH_3O)_3SiCH_2CH_2Si(OCH_3)_3$ and 0.5% of tetrabutyltitanate.

Composition 6(C-6) = 2.5% RP-additive, 7.5% of the compound of the formula $(CH_3O)_3SiCH_2CH_2Si(OCH_3)_3$ and 0.5% of tetrabutyltitanate.

Composition 7(C-7) = 5% RP-additive, 2.5% of the compound of the formula $(CH_3O)_3SiCH_2CH_2Si(OCH_3)_3$ and 0.25% of tetrabutyltitanate.

Composition 8(C-8) = 5% RP-additive, 2.5% of the compound of the formula $(CH_3O)_3SiCH_2CH_2Si(OCH_3)_3$ and 0.5% of tetrabutyltitanate.

Composition 9(C-9) = 5% RP-additive, 2.5% of the compound of the formula $(CH_3O)_3SiCH_2CH_2Si(OCH_3)_3$ and 0.75% of tetrabutyltitanate.

Composition 10(C-10) = 5% RP-additive, 2.5% of the compound of the formula $(CH_3O)_3SiCH_2CH_2Si(OCH_3)_3$ and 1% of tetrabutyltitanate.

The test coating compositions were cast onto Corning 2947 glass microslides and onto aluminum Q-panels with a mill finish, 500-A 35. The cast films were cured by irradiating with ultraviolet radiation from a UVEXS Model 750 A (LCU) manufactured by UVEXS INC., Mountain View, California. Each pass through the LCU gave a dose of 1.0 J/cm$^2$ as measured by an IL 390 Light Bug manufactured by International Light and equipped with a 365 nanometer filter. Each film was given two passes unless otherwise stated.

The adhesion of the cured film to the substrate was determined by removing it with a spatula. The results were observed after various aging periods at room temperature and one aging period consisted of 30 minutes at 150 °C. The results observed were denoted, AF = adhesive failure; WE = adhesive failure with noticeable adhesion; WD = spotty cohesive failure; and CF = cohesive failure. The results observed were as shown in Table I.

TABLE I

| SUBSTRATE | AMBIENT AGING | TEST COATING COMPOSITION C-1 | C-2 | C-3 | C-4 | C-5 | C-6 | C-7 | C-8 | C-9 | C-10 |
|---|---|---|---|---|---|---|---|---|---|---|---|
| GLASS | 0 MIN | AF | AF | CF/WE | CF | CF/WE | CF/WE | CF/WD | CF/WD | CF/WD | CF/WD |
| | 60 MIN | AF | AF | CF/WE | CF | CF/WE | CF/WE | CF/WD | CF/WD | CF/WD | CF/WD |
| | 120 MIN | AF | AF | CF/WE | CF | CF/WE | CF/WE | CF/WD | CF/WD | CF/WD | CF/WD |
| | 20 HRS | AF | AF | CF/WD | CF | CF/WD | CF/WD | CF/WD | CF/WD | CF/WD | CF/WD |
| | HEAT AGE* | AF | CF/WD | CF/WD | CF | CF/WD | CF/WD | CF/WD | CF/WD | CF/WD | CF/WD |
| ALUMINUM | 0 MIN | AF | AF | AF/CF | CF | CF/WE | CF/WE | CF/WD | CF/WD | AF | AF |
| | 60 MIN | AF | AF | AF/CF | CF | CF/WE | CF/WE | CF/WD | CF/WD | AF | AF |
| | 120 MIN | AF | AF | AF/CF | CF | CF/WE | CF/WE | CF/WD | CF/WD | AF | AF |
| | 20 HRS | AF | AF | CF/WE | CF | CF/WD | CF/WD | CF/WD | CF/WD | AF | AF |
| | HEAT AGE* | AF | AF | CF/WE | CF | CF/WD | CF/WD | CF/WD | CF/WD | AF | AF |

*HEAT AGE = ONE DAY AT AMBIENT AND 30 MINUTES AT 150°C.

The results demonstrate that the combination of the reaction product, the hexamethoxysilylethane and titanate catalyst provides improved adhesion over the reaction product alone, the hexamethoxysilylethane alone and no additive in compositions which UV cure and are based on acrylamide functional polyorganosiloxane. This effect was observed on the substrates of aluminum and glass. These experiments also demonstrated that the amount of the ingredients making up the adhesion additve mixture can readily be varied to obtain improved results.

Example 2

A heat curable test coating composition was prepared as described here. A polymer-resin blend was prepared by mixing 79.4 parts of a mixture of 32 weight percent xylene and 68 weight percent of benzene soluble silicone resin containing dimethylvinylsiloxy units, trimethylsiloxy units and $SiO_2$ units where the ratio of the sum of moles of dimethylvinylsiloxy units and trimethylsiloxy units to $SiO_2$ units was 0.65:1 and there was 1.9 weight percent vinyl radical in the resin with 100 parts of dimethylvinylsiloxy endblocked polydimethylsiloxane having a viscosity of about 2 Pa•s. The resulting mixture was stripped of xylene by heating to 100°C. at a pressure of about 670 Pa resulting in a clear polymer-resin blend. A base mixture was prepared by blending 100 parts of the polymer-resin blend with 0.04 part of a divinyldimethyldisiloxane complex of chloroplatinic acid in which there is about 0.7% platinum and 0.01 part of methylbutynol as an inhibitor to prevent premature curing when the base mixture is combined with the curing agent. A curing agent was prepared by blending 92 parts of the polymer-resin blend with 8 parts of trimethylsiloxy endblocked polyorganohydrogensiloxane which had 62.5 mole percent methylhydrogensiloxane units and 37.5 mole percent dimethylsiloxane units (mole percentages were calculated excluding the endblocking siloxy units). The base and the curing agent were mixed in a 1:1 weight ratio with the additives combined in the amounts where the weight percentages were based on 100 parts of the total mixture. Test coating compositions were applied on glass and aluminum substrates as described in Example 1 and were then cured in a hot air oven by heating at 70°C. for 24 hours. Test coating compositions were:

Composition(C-11) = no additive (comparative example).

Composition(C-12) = 0.05% of tetrabutyltitanate (comparative example).

Composition(C-13) = 0.5% of RP-additive (comparative example).

Composition(C-14) = 0.5% of RP-additive and 0.05% of tetrabutyltitanate (comparative example).

Composition(C-15) = 0.5% of the compound of the formula $(CH_3O)_3SiCH_2CH_2Si(OCH_3)_3$ (comparative example).

Composition(C-16) = 0.5% of the compound of the formula $(CH_3O)_3SiCH_2CH_2Si(OCH_3)_3$ and 0.05% of tetrabutyltitanate (comparative example).

Composition(C-17) = 0.5% of RP-additive, 0.25% of the compound of the formula $(CH_3O)_3SiCH_2CH_2Si(OCH_3)_3$ and 0.05% of tetrabutyltitanate.

The results of adhesion tests of the cured test coating compositions were obtained in the same manner as described in Example 1 and were as shown in Table II.

TABLE II

| TEST COATING COMPOSITION | GLASS | ALUMINUM |
|---|---|---|
| C-11 | AF | AF |
| C-12 | AF | AF |
| C-13 | AF | AF |
| C-14 | AF | AF |
| C-15 | AF | AF |
| C-16 | AF | AF |
| C-17 | CF | CF |

Example 3

Ultraviolet radiation curing coating A (Coating A) was prepared by mixing 79.4 parts of a mixture of 32 weight percent xylene and 68 weight percent of benzene soluble silicone resin containing dimethylvinylsiloxy units, trimethylsiloxy units and $SiO_2$ units where the ratio of the sum of moles of dimethylvinylsiloxy units and trimethylsiloxy units to $SiO_2$ units was 0.65:1 and there was 1.9 weight percent vinyl radical in the resin with 100 parts of dimethylvinylsiloxy endblocked polydimethylsiloxane having a viscosity of about 2 Pa•s. The resulting mixture was stripped of xylene by heating to 100°C. at a pressure of about 670 Pa resulting in a clear polymer-resin blend. A mercapto functional polyorganosiloxane of the average formula

$$(CH_3)_3SiO\{(CH_3)_2SiO\}_{43}\{CH_3\underset{\substack{|\\ CH_2CH_2CH_2-SH}}{Si}O\}_5Si(CH_3)_3$$

in an amount of 21.00 parts was mixed into 77.04 parts of the polymer-resin blend and then 0.98 part of photosensitizer,

$$HO(CH_3)_2C-\overset{\substack{O\\ \|}}{C}-C_6H_5,$$

0.98 part of 2-(diisopropylamino)ethanol and 0.01 part p-methoxyphenol was mixed to make Coating A which was clear, had a viscosity of 2.08 Pa•s and was stored in a container opaque to light including UV radiation.

Ultraviolet radiation curable siloxane compositions were prepared by mixing 100 parts of Coating A with each of the adhesion blends described below. These siloxane compositions were cast as films onto Corning 2947 glass microslides and onto aluminum Q-panels with a mill finish, 500-A 35. The cast films were cured by irradiating with ultraviolet radiation from a UV-6 Single Lamp Conveyorized UV Curing Unit manufactured by Colight, Minneapolis, Minnesota. Each pass through the UV-6 gave a dose of 3.0 $J/cm^2$ as measured by an IL 390 Light Bug manufactured by International Light. The power setting of the UV-6 was at 300 watts. Each film was given one pass.

Adhesion additives as described below were prepared by making a physical blend of the described ingredients in a vial, sealing the vial and then heating at 70°C. for 64 hours in a forced air oven to provide a reaction product. The ingredients used to make the adhesion blends were as follows:

Composition(C-18) was made by mixing 100 parts of Coating A with a blend of 3 parts of $(CH_3O)_3SiCH_2CH_2Si(OCH_3)_3$ (Alkoxy 1), 0.5 part of tetrabutyltitanate (Titanate) and 3 parts of Adhesion Additive 1 (AA1) a reaction product of 11.6 parts of hydroxydimethylsilyl endblocked poly(dimethylsiloxane) (Polymer 1) having an average of 10 dimethylsiloxane units per molecule, 8.4 parts of (Alkoxy 1) and 0.2 part of Titanate.

Composition(C-19) was made by mixing 100 parts of Coating A with a blend of 3 parts of Alkoxy 1, 0.5 part of Titanate and 3 parts of Adhesion Additive 2 (AA2) which was as described for AA1 but the

hydroxydimethylsilyl endblocked polydimethylsiloxane was replaced with hydroxymethylvinylsilyl endblocked poly(methylvinylsiloxane) (Polymer 2) having an average of 10 methylvinylsiloxane units per molecule.

Composition(C-20) was made by mixing 100 parts of Coating A with a blend of 3 parts of Alkoxy 1, 0.5 part of Titanate and 3 parts of Adhesion Additive 3 (AA3) which was as described for AA1 but the hydroxydimethylsilyl endblocked poly(dimethylsiloxane) was replaced with hydroxymethylphenylsilyl endblocked poly(methylphenylsiloxane) (Polymer 3) having an average of 8 methylphenylsiloxane units per molecule.

Composition(C-21) was made by mixing 100 parts of Coating A with a blend of 3 parts of Alkoxy 1, 0.5 part of Titanate and 3 parts of Adhesion Additive 4 (AA4) which was prepared as described for AA1 except the amounts of the ingredients reacted were 10 parts Polymer 1, 10 parts Alkoxy 1 and 0.2 part Titanate.

Composition(C-22) was made by mixing 100 parts of Coating A with a blend of 3 parts of Alkoxy 1, 0.5 parts of Titanate and 3 parts of Adhesion Additive 5 (AA5) which was prepared as described for AA2 except the amounts of the ingredients reacted were 10 parts Polymer 2, 10 parts Alkoxy 1 and 0.2 part Titanate.

Composition(C-23) was made by mixing 100 parts of Coating A with a blend of 3 parts of Alkoxy 1, 0.5 part of Titanate and 3 parts of Adhesion Additive 6 (AA6) which was prepared as described for AA3 except the amounts of the ingredients reacted were 10 parts Polymer 3, 10 parts Alkoxy 1 and 0.2 part Titanate.

Composition(C-24) was made by mixing 100 parts of Coating A with a blend of 3 parts of Alkoxy 1, 0.5 part of Titanate and 3 parts of Adhesion Additive 7 (AA7) which was prepared as described for AA4 except ethylpolysilicate (Alkoxy 2) having about 71 weight percent ethoxy group replaced Alkoxy 1.

Composition(C-25) was made by mixing 100 parts of Coating A with a blend of 3 parts of Alkoxy 1, 0.5 part of Titanate and 3 parts of Adhesion Additive 8 (AA8) which was prepared as described for AA5 except Alkoxy 2 replaced Alkoxy 1.

Composition(C-26) was made by mixing 100 parts of Coating A with a blend of 3 parts of Alkoxy 1, 0.5 part of Titanate and 3 parts of Adhesion Additive 9 (AA9) which was prepared as described for AA2 except tetraethylorthosilicate (Alkoxy 3) replaced Alkoxy 1.

Composition(C-27) was made by mixing 100 parts of Coating A with a blend of 3 parts of Alkoxy 1, 0.5 part of Titanate and 3 parts of Adhesion Additive 10 (AA10) which was prepared as described for AA1 except Alkoxy 3 replaced Alkoxy 1.

Composition(C-28) was made by mixing 100 parts of Coating A with a blend of 3 parts of Alkoxy 1, 0.5 part of Titanate and 3 parts of Adhesion Additive 11 (AA11) which was prepared as described for AA1 except Alkoxy 1 was replaced by Alkoxy 4 which was prepared by making a physical blend of 3.36 g of tetramethyldisiloxane, $H(CH_3)_2SiOSi(CH_3)_2H$, 7.4 g of vinyltrimethoxysilane and two drops of a platinum complex of chloroplatinic acid and divinyltetramethyldisiloxane having 0.64 weight percent platinum. The blend was placed in a vial, the vial was sealed and then heated at 70 °C. for about 4 hours.

Composition(C-29) was made by mixing 100 parts of Coating A with a blend of 3 parts of Alkoxy 1, 0.5 part of Titanate and 3 parts of Adhesion Additive 12 (AA12) which was prepared as described for AA1 except Alkoxy 1 was replaced by Alkoxy 5 which was prepared by making a physical blend of 6.72 g of tetramethyldisiloxane, $H(CH_3)_2SiOSi(CH_3)_2H$, 16.2 g of allyltrimethoxysilane and 4 drops of a platinum complex of chloroplatinic acid and divinyltetramethyldisiloxane having 0.64 weight percent platinum. The blend was placed in a vial, the vial was sealed and then heated at 70 °C. for about 4 hours.

The adhesion of the cured films to the substrates was determined by removing them with a spatula. The results were observed after various aging periods at room temperature and after a heating period. The results observed were denoted, AF = adhesive failure; WE = adheive failure with noticeable adhesion; WD = spotty cohesive failure; and CF = cohesive failure. The results observed were as shown in Table III.

TABLE III

| SUBSTRATE | AMBIENT AGING | ADHESION ADDITIVE 0** | C-18 | C-19 | C-20 | C-21 | C-22 | C-23 | C-24 | C-25 | C-26 | C-27 | C-28 | C-29 |
|---|---|---|---|---|---|---|---|---|---|---|---|---|---|---|
| GLASS | 0 MIN | AF | CF | AF | AF | CF | AF | WE | AF | AF | AF | CF | AF | CF |
| | 60 MIN | AF | CF | AF | CF | CF | AF | CF | CF | CF | AF | CF | AF | CF |
| | 240 MIN | AF | CF | AF | CF | CF | AF | CF | CF | CF | AF | CF | AF | CF |
| | 20 HRS | AF | CF | AF | CF | CF | AF | CF | CF | CF | AF | CF | AF | CF |
| | HEAT AGE* | AF | CF | AF | CF | CF | AF | CF | CF | CF | AF | CF | AF | CF |
| ALUMINUM | 0 MIN | AF | AF | AF | AF | AF | AF | AF | AF | AF | AF | AF | AF | AF |
| | 60 MIN | AF | AF | AF | AF | AF | AF | AF | AF | AF | AF | AF | AF | AF |
| | 240 MIN | AF | AF | AF | AF | AF | AF | AF | AF | AF | WE | AF | AF | AF |
| | 20 HRS | AF | AF | WE | AF | AF | WE | AF | AF | AF | WE | AF | AF | AF |
| | HEAT AGE* | AF | CF | WE | CF | WE | WE | CF | CF | CF | WE | CF | AF | WE |

* HEAT AGE = 1 DAY AT AMBIENT TEMPERATURE AND 30 MINUTES AT 150°C.
**COATING A WITH NO ADHESION ADDITIVE.

The results demonstrate the ability of the adhesion additives of the present invention to impart unprimed, room temperature (ambient) adhesion to an ultraviolet radiation curable siloxane composition. The adhesion improved by aging at room temperature and by heating. The composition and method of preparation of the adhesion additive effects its ability to impart improved adhesion in a specific ultraviolet radiation curable siloxane composition.

The adhesion blends used in C-19, C-22, C-26 and C-28 were not very effective in Coating A but gave excellent results in Coating B.

## Example 4

Ultraviolet radiation curable compositions were prepared as follows. Composition (C-31) was prepared by mixing 100 parts of Coating A with 0.5 part of Titanate and 6 parts of Alkoxy 1. Composition (C-32) was prepared by mixing 100 parts of Coating A with 0.5 part of Titanate and 6 parts of AA4. Composition (C-33) was prepared by mixing 100 parts of Coating A with 0.5 part of Titanate, 3 parts of Alkoxy 1 and 3 parts of AA4. Composition (C-34) was prepared by mixing 100 parts of Coating A with 0.5 part of Titanate, 3 parts of Alkoxy 4 and 3 parts of AA4. Composition (C-35) was prepared by mixing 100 parts of Coating A, 0.5 part of Titanate, 3 parts of Alkoxy 5 and 3 parts of AA4. Composition (C-36) was prepared by mixing 100 parts of Coating A with 0.5 part of Titanate, 3 parts of Alkoxy 6 which was prepared by making a physical blend of 6.01 g of poly(methylhydrogensiloxane) cyclics, 16.23 g of allyltrimethoxysilane and 4 drops of a platinum complex of chloroplatinic acid and divinyltetramethyldisiloxane having 0.64 weight percent platinum. The blend was placed in a vial, the vial was sealed and then heated at 70 °C. for about 4 hours. Composition (C-30) was Coating A without any adhesion additive. These compositions were cured and tested for adhesion as described in Example 3. The results observed were as shown in Table IV.

TABLE IV

| SUBSTRATE | AMBIENT AGING | CURABLE COMPOSITION C-30 | C-31 | C-32 | C-33 | C-34 | C-35 | C-36 |
|---|---|---|---|---|---|---|---|---|
| GLASS | 0 MIN | AF | CF | CF | CF | CF | CF | CF |
| | 60 MIN | AF | CF | CF | CF | CF | CF | CF |
| | 240 MIN | AF | CF | CF | CF | CF | CF | CF |
| | 20 HRS | AF | CF | CF | CF | CF | CF | CF |
| | HEAT AGE* | AF | CF | CF | CF | CF | CF | CF |
| ALUMINUM | 0 MIN | AF | AF | AF | AF | AF | AF | AF |
| | 60 MIN | AF | AF | AF | AF | AF | WE | AF |
| | 240 MIN | AF | AF | AF | AF | AF | WE | CF |
| | 20 HRS | AF | AF | AF | AF | AF | WE | WD |
| | HEAT AGE* | AF | WE | WD | WE | CF | CF | CF |

*HEAT AGE = 1 DAY AT AMBIENT TEMPERATURE AND 30 MINUTES AT 150°C.

Ultraviolet radiation curable composition C-30, C-31 and C-32 are provided as comparative examples and are not within the scope of the present invention.

Example 5

An amino functional endblocked polydiorganosiloxane was prepared by charging to a reactor 80.98 parts of Polymer 1 and slowly adding 19.02 parts of a silane of the formula

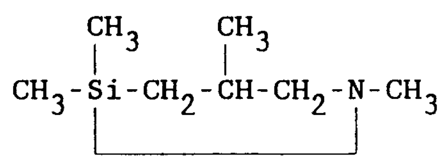

while under a nitrogen blanket and maintaining the temperature below 30 ° C. After the addition of the silane was completed, the reaction was slowly heated to 80 ° C. and maintained at that temperature for 1 hour. Volatiles were then removed at 80 ° C and about 45 mmHg. The resultant amino functional endblocked polydiorganosiloxane, Amino-Polymer A, had an amine neutral equivalent (ANE) of 708.5 g/equivalent.

An amino functional endblocked polydiorganosiloxane, Amino-Polymer B, was prepared by charging to a reactor 3.76 parts of Amino-Polymer A, 12.64 parts of poly(methylphenyl-siloxane) cyclics having from 3 to 6 methylphenylsiloxane units per molecule, 81.92 parts of poly(dimethylsiloxane) cyclics having from 3 to 6 dimethylsiloxane units per molecule, 0.49 part of dimethyl formamide and 0.01 part of a potassium silanolate catalyst. The resulting mixture was heated at 150 ° C. for about 8 hours, cooled to 50 ° C. and then neutralized with 0.044 part of propionic acid. The mixture was stirred for at least one hour, the excess propionic acid was neutralized with 0.049 part of sodium bicarbonate and then stripped at 150 ° C. and about 45 mmHg. To the stripped mixture was added 0.99 part of Supercell, a diatomaceous earth filtering aid and then the mixture was pressure filtered. The resultant amino functional endblocked polydiorganosiloxane, Amino-Polymer B, had an ANE of 17,870 g/equivalent, a refractive index of 1.4245, a viscosity of 6.75 Pa•s and a non-volatile content of 97.7%.

An acrylamide functional endblocked polydiorganosiloxane was prepared by adding to a 12-liter, 3-necked flask, 3,000 g Amino-Polymer B, 3,000 g heptane and 12.70 g sodium methoxide. The mixture was cooled to between 0 ° C. and 5 ° C. and 76.3 cc methanol was added and then 19. 10 cc of acryloyl chloride in 281 cc heptane was added in 2 hours. After about one hour 120 g sodium bicarbonate and 60 g of Supercell were added to neutralize the mixture. After stirring the mixture until it was neutral, it was pressure filtered through a 0.22 micron membrane filter. The resultant clear solution was mixed with 50 ppm p-methoxyphenol (MEHQ) and 25 ppm phenothiazine and vacuum stripped to 50 ° C and less than 10 mmHg. The resulting product was an acrylamide functional polyorganosiloxane where the amine groups were converted to acrylamide functionality of the formula

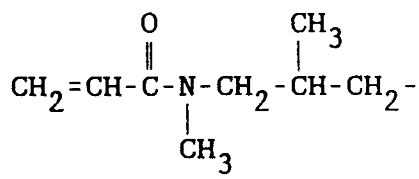

and is designated Acrylamide A which had a 98.3% conversion of amine to acrylamide, a viscosity of 5.44 Pa•s, less than 1 ppm chloride, less than 0.5 ppm sodium-and less than 0.5 ppm potassium.

An ultraviolet radiation curable coating (Coating B) was prepared by mixing 100 parts of Acrylamide A with one part of

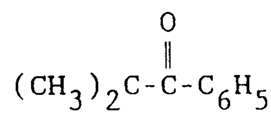

as photosensitizer. Ultraviolet radiation curable compositions were prepared by mixing 100 parts of Coating B with 0.5 part Titanate, 3 parts of Alkoxy 1 and 3 parts of AA1, AA2, AA3, AA7, AA8 and AA10 to provide compositions C-38, C-39, C-40, C-41, C-42 and C-43 respectively. Ultraviolet radiation curable composition C-44 was prepared by mixing 100 parts of Coating B with 0.5 part of Titanate and 6 parts of Alkoxy 1. Ultraviolet radiation curable composition C-45 was prepared by mixing 100 parts of Coating B with 0.5 part of Titanate and 6 parts of AA2. Ultraviolet radiation curable composition C-46 was prepared by mixing 100 parts of Coating B with 0.5 part of Titanate, 3 parts of Alkoxy 4 and 3 parts of AA2. Ultraviolet radiation curable composition C-47 was prepared by mixing 100 parts of Coating B with 0.5 part of Titanate, 3 parts of Alkoxy 5 and 3 parts of AA2. Ultraviolet radiation curable composition C-37 was Coating B without adhesion additives. These compositions were cured and tested for adhesion to glass and aluminum as described in Example 3. The results were as described in Table V.

TABLE V

| SUBSTRATE | AMBIENT AGING | CURABLE COMPOSITION | | | | | | | | | | |
|---|---|---|---|---|---|---|---|---|---|---|---|---|
| | | C-37 | C-38 | C-39 | C-40 | C-41 | C-42 | C-43 | C-44 | C-45 | C-46 | C-47 |
| GLASS | 0 MIN | AF | WE | CF | WE | AF | AF | CF | WE | WE | WE | WE |
| | 60 MIN | AF | CF | CF | CF | AF | WE | CF | WE | WE | WE | WE |
| | 240 MIN | AF | WD | CF | WD | AF | WE | CF | WE | WE | WE | WE |
| | 20 HRS | AF | CF | CF | CF | AF | CF | CF | CF | WE | WE | WE |
| | HEAT AGE* | AF | CF | CF | CF | WD | CF | CF | CF | WE | WE | CF |
| ALUMINUM | 0 MIN | AF | WE | CF | AF | AF | AF | CF | AF | CF | CF | CF |
| | 60 MIN | AF | CF | CF | AF | AF | AF | CF | AF | CF | CF | CF |
| | 240 MIN | AF | WD | CF | AF | AF | AF | CF | AF | CF | CF | CF |
| | 20 HRS | AF | WD | CF | AF | WE | AF | CF | WE | CF | CF | CF |
| | HEAT AGE* | AF | WD | CF | CF | WE | AF | CF | CF | CF | CF | CF |

*HEAT AGE = ONE DAY AT AMBIENT AND 30 MINUTES AT 150°C.

Ultraviolet radiation curable compositions C-37, C-44 and C-45 are provided as comparative examples and are not within the scope of the present invention.

## Example 6

An amino functional endblocked polydiorganosiloxane, Amino-polymer C, was prepared as described in Example 5 except the amount of Amino-Polymer A was increased to lower the viscosity. For this polymer, the charge to the reactor was 8.75 parts of Amino-Polymer A, 12.62 parts of poly(methylphenylsiloxane)

cyclics having from 3 to 6 methylphenylsiloxane units per molecule and 76.95 parts of poly-(dimethylsiloxane) cyclics having from 3 to 6 dimethylsiloxane units per molecule. The remainder of the reactants and the procedure were the same as for Amino-Polymer B. Amino-Polymer C had an ANE of 7,340 g/equivalent, a viscosity of 0.715 Pa•s and a non-volatile content of 97.2%.

An acrylamide functional endblocked polydiorganosiloxane was prepared by adding to a 12-liter, 3-necked flask, 3,000 g Amino-Polymer C, 3,000 g heptane and 23.60 g sodium methoxide. The resulting mixture was cooled to between 0° C. and 5° C. and 10.0 cc methanol was added and then 38.16 cc of acryloyl chloride in 282 cc heptane was added in one hour. The resultant mixture had an acidity of 0.28 mg KOH/g. After about 1 hour, 168 g sodium bicarbonate and 60 g Supercell was added to neutralize the mixture. The mixture was then processed using the procedure above for Acrylamide A. The resulting product, Acrylamide B, had a conversion of 98.9% of amine to acrylamide, a viscosity of 0.8 Pa•s, less than 1 ppm chloride, less than 0.5 ppm sodium and less than 0.5 ppm potassium.

Adhesion additive 13 (AA13) was prepared by charging 119.2 g Alkoxy 1 into a 500 ml, three-necked flask equipped with a stirrer, thermometer, condenser and nitrogen purge. Then, 3.0 g of Titanate was added and stirred until dissolved. After the addition, the flask contents were heated to 70° C. and 177.8 g of Polymer 2 was dripped in over a 75 minute period. Reaction was allowed to continue for 24 hours at 70° C.

Ultraviolet radiation curable coating, Coating C, was prepared by mixing 100 parts of Acrylamide B with 1 part of

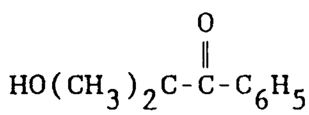

as photosensitizer.

Ultraviolet radiation curable compositions were prepared by mixing 100 parts of Coating C with 0.5 part of one of the following condensation catalysts, 5 parts of Alkoxy 1 and 5 parts of AA13. The following condensation catalysts were used where the designation of C followed by a number is used herein as a reference identifier for the composition containing that particular condensation catalyst: Titanate (C-48), dibutyltindilaurate (C-49), stannous naphthenate (C-50), stannous octoate (C-51), bis(ethylacetoacetato)-diisopropoxytitanium (C-52), mixed titanium ortho ester complexes (Tyzor GBA Titanate obtained from E. I. DuPont) (C-53), isopropoxy(tri-ethanolaminato)titanium (C-54) and a reaction product of tetraalkyl titanate with betadiketone and alkanolamine (Tyzor CLA Titanate obtained from E. I. DuPont) (C-55). These compositions were cast as films onto aluminum Q-panels with a mill finish, 500-A35. The cast films were cured by irradiating with ultraviolet light from a Model DRS-120 Ultraviolet Curing System, equipped with two F-450 UV lamps housing H-type bulbs, manufactured by Fusion Systems Corporation, Rockville, Maryland. The lamps were set to the high power level and the conveyer adjusted to 0.0203 m/s (4 feet/minute) which provided 2.8 $J/cm^2$ as measured by the IL390 Light Bug. The results observed were as shown in Table VI.

TABLE VI

| AMBIENT AGING | CURABLE COMPOSITIONS | | | | | | | |
|---|---|---|---|---|---|---|---|---|
| | C-48 | C-49 | C-50 | C-51 | C-52 | C-53 | C-54 | C-55 |
| 0 MIN | AF | AF | AF | AF | AF | AF | CF | AF |
| 30 MIN | AF | AF | AF | AF | AF | CF | CF | CF |
| 60 MIN | CF | AF | AF | AF | CF | CF | CF | CF |
| 120 MIN | CF | AF | AF | AF | CF | CF | CF | CF |
| 72 hrs | CF | AF | CF | AF | CF | CF | CF | CF |

The results of Table VI shows that titanium condensation catalysts provided much better adhesion than tin condensation catalysts for aluminum substrates.

Example 7

Ultraviolet radiation curable composition C-56 was prepared by mixing 54.64 parts of Acrylamide A, 1.09 parts of 2-hydroxy-2-methyl-1-phenylpropan-1-one, 0.27 part of Titanate, 36.06 parts of fused silica having an average particle size of 4 microns, 3.85 parts of Alkoxy 1 and 4.09 parts of AA2. The resultant radiation curable composition had a viscosity of 9.2 Pa•s. This composition was storable in one package for more than three months and had an opaque white appearance. The ionic purity using a water extraction method was determined and there was less than 1 ppm sodium, less than 1 ppm potassium and less than 5 ppm chloride. The composition cured to a depth of greater than 100 mils upon irradiation with 4 $J/cm^2$ in the Model DRS-120 Ultraviolet Curing System described above. The composition was cast onto the substrates of Example 3, cured with 2 $J/cm^2$ in the Model DRS-120 Ultraviolet Curing System and examined for adhesion as described in Example 3. The results obtained were as shown in Table VII. In the table, GL = glass and Al = aluminum.

TABLE VII

| SAMPLE THICKNESS | SUBSTRATE | | AMBIENT AGING | | |
|---|---|---|---|---|---|
| | | 0 MIN | 30 MIN | 120 MIN | 300 MIN |
| 10 mil | GL AL | CF AF | CF AF | CF AF | CF CF |
| 20 mil | GL AL | WE AF | CF AF | CF CF | CF CF |
| 40 mil | GL AL | AF AF | WE AF | CF CF | CF CF |

The hardness of the cured film was 20 on the Shore A scale.

Example 8

An acrylamide functional endblocked polydiorganosiloxane was prepared from Amino-Polymer C using a procedure as described in Example 6. The resulting product, Acrylamide C, had a conversion of 98.1% of amine to acrylamide, a viscosity of 0.6 Pa•s, less than 1 ppm chloride, less than 0.5 ppm sodium and less than 0.5 ppm potassium. Ultraviolet radiation curable composition C-57 was prepared by mixing 9.2 parts of Acrylamide C, 0.05 part Titanate, 0.1 part of 2-hydroxy-2-methyl-1-phenyl-propan-1-one, 0.25 part of Alkoxy 1 and 0.5 part of AA2. Films were cast at 10 mils wet thickness, cured by exposure to UV radiation and the adhesion measured as described in Example 3. The results observed were as shown in Table VIII.

TABLE VIII

| SUBSTRATE | AMBIENT AGING | | | | |
|---|---|---|---|---|---|
| | 0 MIN | 60 MIN | 120 MIN | 24 HRS | HEAT AGE* |
| SILICON NITRIDE | AF | WE | WE | CF | CF |
| SILICON DIOXIDE | AF | AF | AF | CF | CF |
| EPOXIDE RESIN | WD | CF | CF | CF | CF |
| POLYIMIDE RESIN | WD | WD | WD | CF | CF |
| COPPER | AF | AF | AF | AF | AF |

*HEAT AGE = 20 hours at ambient and 30 minutes at 150°C

The results of this example showed that the adhesion mixture of this invention provides adhesion to many substrates. It was observed that C-57 did not show improved adhesion to copper substrate.

Example 9

Ultraviolet radiation curable compositions were prepared by mixing 100 parts of Coating A with each of the adhesion blend as described below. The resulting compositions were cured and tested as described in Example 3.

Composition(C-58) was 100 parts of Coating A with 0.5 weight percent Titanate and 10 weight percent Alkoxy 1 (Comparative example).

Composition(C-59) was 100 parts of Coating A with 0.5 weight percent Titanate, 5 weight percent

Alkoxy 1 and 5 weight percent AA1.

Composition(C-60) was 100 parts of Coating A with 0.5 weight percent Titanate, 5 weight percent Alkoxy 1 and 5 weight percent AA3.

Composition(C-61) was 100 parts of Coating A with 0.5 weight percent Titanate, 5 weight percent Alkoxy 1 and 5 weight percent AA7.

Composition(C-62) was 100 parts of Coating A with 0.5 weight percent Titanate, 5 weight percent Alkoxy 1 and 5 weight percent AA8.

Composition(C-63) was 100 parts of Coating A with 0.5 weight percent Titanate, 5 weight percent Alkoxy 1 and 5 weight percent AA10.

Composition(C-64) was 100 parts of Coating A with 0.5 weight percent Titanate and 10 weight percent AA1 (Comparative example).

Composition(C-65) was 100 parts of Coating A with 0.5 weight percent Titanate and 10 weight percent AA3 (Comparative example).

Composition(C-66) was 100 parts of Coating A with 0.5 weight percent Titanate and 10 weight percent AA7 (Comparative example).

Composition(C-67) was 100 parts of Coating A with 0.5 weight percent Titanate and 10 weight percent AA8 (Comparative example).

Composition(C-68) was 100 parts of Coating A with 0.5 weight percent Titanate and 10 weight percent AA10 (Comparative example).

The results observed were as shown in Table IX.

TABLE XI

| SUBSTRATE | AMBIENT AGING | COMPOSITION C-58 | C-59 | C-60 | C-61 | C-62 | C-63 | C-64 | C-65 | C-66 | C-67 | C-68 |
|---|---|---|---|---|---|---|---|---|---|---|---|---|
| GLASS | 0 MIN | CF | CF | CF | AF | AF | CF | AF | AF | AF | AF | AF |
| | 60 MIN | CF | CF | CF | CF | AF | CF | AF | AF | AF | AF | AF |
| | 240 MIN | CF | CF | CF | CF | AF | CF | AF | AF | AF | AF | AF |
| | 20 HRS | CF | CF | CF | CF | CF | CF | AF | AF | AF | AF | AF |
| | HEAT AGE* | CF | CF | CF | CF | CF | CF | AF | AF | AF | AF | AF |
| ALUMINUM | 0 MIN | AF | WD | CF | AF | AF | CF | AF | AF | AF | AF | AF |
| | 60 MIN | CF | WD | CF | AF | AF | CF | AF | AF | AF | AF | AF |
| | 240 MIN | CF | CF | CF | AF | AF | CF | AF | AF | AF | AF | AF |
| | 20 HRS | CF | CF | CF | CF | CF | CF | AF | AF | AF | AF | AF |
| | HEAT AGE* | CF | CF | CF | CF | CF | CF | AF | AF | AF | AF | AF |

*HEAT AGE = 1 day at ambient temperature and 30 minutes at 150°C.

The above results showed that the adhesion was not improved by increasing the concentration of the adhesion promoter but rather it was improved by the blend of the present invention.

Example 10

Ultraviolet radiation curable compositions were prepared by blending 91 parts of an acrylamide functional polydiorganosiloxane as described in Example 1 (acrylamide 10A) or an acrylamide functional polydiorganosiloxane as described in Example 1 except the average number of dimethylsiloxane units per molecule was 432 and the average number of methyphenylsiloxane units was 33 (acrylamide 10B), 0.5 parts of titanate, 1 part of 2-hydroxy-2-methyl-1-phenylpropan-1-one and 7.5 parts of total adhesion additives as described below.

Adhesion Additive 10A was $(CH_3O)_3SiCH_2CH_2Si(OCH_3)_3$ (Comparative Example).

Adhesion Additive 10B was 2.5 parts $(CH_3O)_3SiCH_2CH_2Si(OCH_3)_3$ and 5 parts RP-additive.

Adhesion Additive 10C was 2.5 parts of a silane of the formula

```
    O
   / \
CH2-CHCH2OCH2CH2CH2Si(OCH3)3
```

and 5 parts of RP-additive.

Adhesion Additive 10D was 2.5 parts of vinyltrimethyloxysilane and 5 parts RP-additive.

Adhesion Additive 10E was 2.5 parts methyltrimethoxysilane and 5 parts RP-additive.

Adhesion Additive 10F was 1.25 parts vinyltrimethoxysilane, 1.25 parts methyltrimethoxysilane and 5 parts RP-additive.

Compositions were prepared, cast as 10 mil wet films on aluminum Q-panels and glass slides, cured with the Model DRS-120 Ultraviolet Curing System described in Example 6. Each cast film was cured with two passes at 0.0203 m/s (four feet per minute). The adhesion was observed as described in Example 1 and the results were as shown in Table XII.

TABLE XII

| Acrylamide | Substrate | Additive | Adhesion |
|---|---|---|---|
| 10A | Glass | 10A | CF/WE |
| 10A | Aluminum | 10A | CF |
| 10A | Glass | 10B | CF/WE |
| 10A | Aluminum | 10B | AF |
| 10A | Glass | 10C | CF |
| 10A | Aluminum | 10C | CF |
| 10A | Glass | 10D | CF |
| 10A | Aluminum | 10D | CF |
| 10A | Glass | 10E | AF |
| 10A | Aluminum | 10E | AF |
| 10A | Glass | 10F | AF |
| 10A | Aluminum | 10F | AF |
| 10B | Glass | 10A | CF |
| 10B | Aluminum | 10A | CF |
| 10B | Glass | 10B | CF |
| 10B | Aluminum | 10B | CF |
| 10B | Glass | 10C | AF/CF |
| 10B | Aluminum | 10C | CF/WE |
| 10B | Glass | 10D | CF |
| 10B | Aluminum | 10D | CF |
| 10B | Glass | 10E | AF/CF |
| 10B | Aluminum | 10E | CF/WD |
| 10B | Glass | 10F | CF |
| 10B | Aluminum | 10F | CF |

## Claims

**1.** An adhesion additive for ultraviolet radiation curable siloxane compositions consisting essentially of a mixture consisting essentially of

(I) a reaction product consisting of the material obtained by combining and reacting

(A) an alkoxysilicon compound having a general formula $Si(OR)_4$ where R is methyl or ethyl or an alkoxysilicon compound having a general formula $(RO)_3Si\text{-}X\text{-}Si(OR)_3$ in which R is methyl or ethyl and X is a divalent radical selected from the group consisting of $-(CH_2)_n-$ where n has a value of from 1 to 10 inclusive; $-C_6H_4-$;

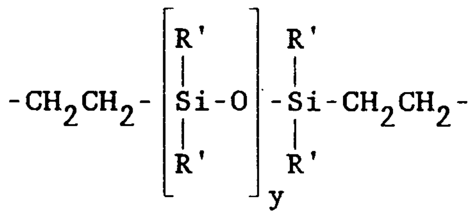

where each R' is independently selected from a group consisting of an aliphatic hydrocarbon radical and an aromatic hydrocarbon radical and y has a value of from 1 to 10 inclusive; and -O-$(R''_2SiO)_m$- in which R'' is selected from the group consisting of -OR and R' and m has a value of from 0 to 10 inclusive,

(B) a polydiorganosiloxane of the formula $HO(R^2{}_2SiO)_xH$ where $R^2$ is a monovalent radical independently selected from the group consisting of an aliphatic hydrocarbon radical and aromatic hydrocarbon radical and x has a value of from 3 to 50 on the average,

(C) a catalytic amount of a catalyst for reaction between a ≡SiOR group of (A) and a hydroxyl group of (B),

where the amounts of (A) and (B) are such that the molar ratio of moles of alkoxy in (A) per mole of hydroxy group in (B) is from 2 to 15,

(II) an alkoxysilicon compound having a general formula $R_a{}^*Si(OR)_{4-a}$ where R is methyl or ethyl, R* is a monovalent radical selected from alkyl, alkenyl, acryl functional alkylene radical or glycidoxypropyl and a is 0 or 1 or an alkoxysilicon compound having a general formula $(RO)_3Si$-X-$Si(OR)_3$ in which R is methyl or ethyl and X is a divalent radical selected from the group consisting of $-(CH_2)_n-$ where n has a value of from 1 to 10 inclusive; $-C_6H_4-$;

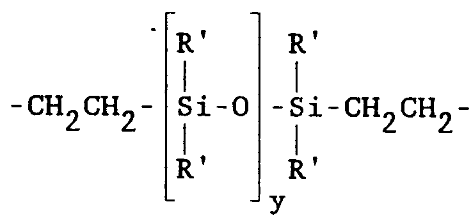

where each R' is independently selected from a group consisting of an aliphatic hydrocarbon radical and an aromatic hydrocarbon radical and y has a value of from 1 to 10 inclusive; and -O$(R''_2SiO)_m$- in which R'' is selected from the group consisting of -OR and R' and m has a value of from 0 to 10 inclusive, and

(III) a compound capable of catalyzing an adhesion reaction between a coating and a substrate.

**2.** An ultraviolet radiation curable siloxane composition comprising

(1) a mixture comprising at least one ultraviolet radiation activatable siloxane polymer which will cure when exposed to ultraviolet radiation by forming a crosslinked product and a photoinitiator which is activated by ultraviolet radiation, and

(2) an adhesion additive for ultraviolet radiation curable siloxane compositions consisting essentially of

(I) a reaction product consisting of the material obtained by combining and reacting

(A) an alkoxysilicon compound having a general formula $Si(OR)_4$ where R is methyl or ethyl or an alkoxysilicon compound having a general formula $(RO)_3Si$-X-$Si(OR)_3$ in which R is methyl or ethyl and X is a divalent radical selected from the group consisting of $-(CH_2)_n-$ where n has a value of from 1 to 10 inclusive; $-C_6H_4-$;

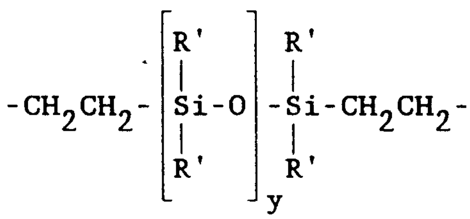

where each R' is independently selected from a group consisting of an aliphatic hydrocarbon radical and an aromatic hydrocarbon radical and y has a value of from 1 to 10 inclusive; and $-O(R''_2SiO)_m-$ in which R'' is selected from the group consisting of -OR and R' and m has a value of from 0 to 10 inclusive,

(B) a polydiorganosiloxane of the formula $HO(R^2{}_2SiO)_xH$ where $R^2$ is a monovalent radical independently selected from the group consisting of an aliphatic hydrocarbon radical and aromatic hydrocarbon radical and x has a value of from 3 to 50 on the average,

(C) a catalytic amount of a catalyst for reaction between a ≡SiOR group of (A) and a hydroxyl group of (B),

where the amounts of (A) and (B) are such that the molar ratio of moles of alkoxy in (A) per mole of hydroxy group in (B) is from 2 to 15,

(II) an alkoxysilicon compound having a general formula $R_a{}^*Si(OR)_{4-a}$ where R is methyl or ethyl, R* is a monovalent radical selected from alkyl, alkenyl, acryl functional alkylene radical or glycidoxypropyl and a is 0 or 1 or an alkoxysilicon compound having a general formula $(RO)_3Si-X-Si(OR)_3$ in which R is methyl or ethyl and X is a divalent radical selected from the group consisting of $-(CH_2)_n-$ where n has a value of from 1 to 10 inclusive; $-C_6H_4-$;

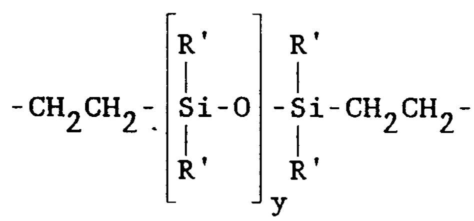

where each R' is independently selected from a group consisting of an aliphatic hydrocarbon radical and an aromatic hydrocarbon radical and y has a value of from 1 to 10 inclusive; and $-O-(R''_2SiO)_m-$ in which R'' is selected from the group consisting of -OR and R' and m has a value of from 0 to 10 inclusive, and

(III) a compound capable of catalyzing an adhesion reaction between a coating of (1) and (2) and a substrate.

**3.** A heat curable siloxane composition comprising

(i) a mixture comprising an alkenyl functional polydiorganosiloxane having at least two alkenyl groups per molecule, a polyorganohydrogensiloxane having at least two silicon-bonded hydrogen atoms per molecule and a platinum catalyst, and

(ii) an adhesion additive for ultraviolet radiation curable siloxane compositions consisting essentially of a mixture consisting essentially of

(I) a reaction product consisting of the material obtained by combining and reacting

(A) an alkoxysilicon compound having a general formula $Si(OR)_4$ where R is methyl or ethyl or an alkoxysilicon compound having a general formula $(RO)_3Si-X-Si(OR)_3$ in which R is methyl or ethyl and X is a divalent radical selected from the group consisting of $-(CH_2)_n-$ where n has a value of from 1 to 10 inclusive; $-C_6H_4-$;

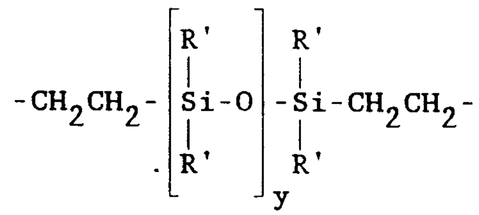

where each R' is independently selected from a group consisting of an aliphatic hydrocarbon radical and an aromatic hydrocarbon radical and y has a value of from 1 to 10 inclusive; and -O-($R''_2SiO)_m$- in which R'' is selected from the group consisting of -OR and R' and m has a value of from 0 to 10 inclusive,

(B) a polydiorganosiloxane of the formula $HO(R^2{}_2SiO)_xH$ where $R^2$ is a monovalent radical independently selected from the group consisting of an aliphatic hydrocarbon radical and aromatic hydrocarbon radical and x has a value of from 3 to 50 on the average,

(C) a catalytic amount of a catalyst for reaction between a ≡SiOR group of (A) and a hydroxyl group of (B),

where the amounts of (A) and (B) are such that the molar ratio of moles of alkoxy in (A) per mole of hydroxy group in (B) is from 2 to 15,

(II) an alkoxysilicon compound having a general formula $Si(OR)_4$ where R is methyl or ethyl or an alkoxysilicon compound having a general formula $(RO)_3Si\text{-}X\text{-}Si(OR)_3$ in which R is methyl or ethyl and X is a divalent radical selected from the group consisting of $-(CH_2)_n-$ where n has a value of from 1 to 10 inclusive; $-C_6H_4-$;

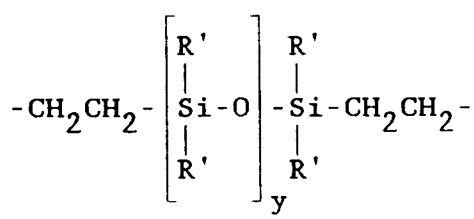

where each R' is independently selected from a group consisting of an aliphatic hydrocarbon radical and an aromatic hydrocarbon radical and y has a value of from 1 to 10 inclusive; and -O($R''_2SiO)_m$- in which R'' is selected from the group consisting of -OR and R' and m has a value of from 0 to 10 inclusive, and

(III) a compound capable of catalyzing an adhesion reaction between a coating of (i) and (ii) and a substrate.

European Patent Office

# EUROPEAN SEARCH REPORT

Application Number

EP 91 31 1214

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-0 356 075 (DOW CORNING)<br>* page 11, line 24 - line 35; claim 1 *<br>--- | 1-3 | C08L83/04<br>C08L83/08 |
| Y,P | EP0 409 272 (DOW CORNING)<br>* claim 1 *<br>--- | 1-3 | |
| Y | US4 737 562 (CHAUDHURY)<br>* claim 1 *<br>--- | 1-3 | |
| A | EP0 315 342 (DOW CORNING)<br>* page 5, line 13 - line 18 *<br>&US-A--4.824.875(D)<br>----- | 1-3 | |
| | | | **TECHNICAL FIELDS SEARCHED (Int. Cl.5 )** |
| | | | C08L<br>C08K<br>C09D |

The present search report has been drawn up for all claims

| Place of search | Date of completion of the search | Examiner |
|---|---|---|
| THE HAGUE | 13 APRIL 1992 | LENTZ J.C. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)